# DEMANDE DE BREVET EUROPEEN

(11) **EP 4 681 946 A1**
(43) Date de publication de la demande: **21.01.2026**
(21) Numéro de dépôt: 25190314.2
(22) Date de dépôt: 17.07.2025
(51) Int. Cl.: B60H 1/00, B60H 1/32

(54) **CIRCUIT DE MANAGEMENT THERMIQUE DE VÉHICULE**

(30) Priorité: 19.07.2024 FR 2407967
(71) Demandeur: HUTCHINSON, 75008 Paris (FR)
(72) Inventeur: GROUILLET, Philippe, 45700 CONFLANS SUR LOING (FR); MACHETON, Christophe, 45200 AMILLY (FR)
(74) Mandataire: Ernest Gutmann - Yves Plasseraud S.A.S.

(57) **Abrégé**

Le présent exposé concerne une installation de conditionnement thermique d'un habitacle et/ou d'au moins un organe d'un véhicule comprenant un circuit caloporteur (100) de circulation d'un fluide caloporteur, et un circuit réfrigérant (200) de circulation d'un fluide réfrigérant.

## Description

### Domaine technique

La présente divulgation relève du domaine des systèmes de gestion thermique pour véhicules, en particulier véhicules électriques fonctionnant avec des batteries, comprenant à la fois un sous-circuit de fluide caloporteur et un sous-circuit de fluide réfrigérant.

### Technique antérieure

Il est connu d'utiliser conjointement des circuits de fluide caloporteur et de fluide réfrigérant dans un système de gestion thermique pour refroidir et/ou réchauffer les différents composants d'un véhicule, notamment des véhicules à propulsion électrique.

L'architecture des circuits de fluide caloporteur et de fluide réfrigérant est adaptée selon les véhicules. Ils offrent en général plusieurs modes de fonctionnement, pilotés par l'ouverture ou la fermeture de vannes et permettant de gérer les débits de fluides caloporteur/réfrigérant circulant dans les différents composants.

L'adaptabilité des systèmes de gestion thermique existants est souvent limitée par leur conception, qui ne permet pas toujours de hiérarchiser efficacement les différents paramètres opérationnels tels que le confort des occupants ou l'efficacité du refroidissement/chauffage des composants du véhicule.

La présente divulgation cherche à remédier à ces inconvénients.

### Résumé

La présente divulgation vient améliorer la situation.

Il est proposé une installation de conditionnement thermique d'un habitacle et/ou d'au moins un organe d'un véhicule comprenant :
un circuit caloporteur de circulation d'un fluide caloporteur,
un circuit réfrigérant de circulation d'un fluide réfrigérant,
dans laquelle le circuit caloporteur comprend ledit au moins un organe du véhicule pour y échanger de la chaleur, un moyen de chauffage du fluide caloporteur, un échangeur thermique inter-circuits, un échangeur thermique frontal apte à échanger de la chaleur avec de l'air extérieur au véhicule, et des moyens de circulation du fluide caloporteur aptes à faire circuler le fluide caloporteur entre un ou plusieurs organes du véhicule, le moyen de chauffage du fluide caloporteur, l'échangeur thermique frontal et/ou l'échangeur thermique inter-circuits, et
dans laquelle le circuit réfrigérant comprend un compresseur, un premier échangeur thermique et un deuxième échangeur thermique aptes à échanger de la chaleur avec de l'air, un quatrième échangeur thermique, un cinquième échangeur thermique apte à échanger de la chaleur avec de l'air extérieur au véhicule, et des moyens de circulation du fluide réfrigérant aptes à faire circuler le fluide caloporteur entre les échangeurs thermiques du circuit réfrigérant, et dans laquelle l'échangeur thermique inter-circuits du circuit caloporteur et le quatrième échangeur thermique du circuit réfrigérant sont arrangés en échange thermique entre eux.

L'installation proposée offre une grande polyvalence et permet ainsi de maîtriser la température des composants critiques du véhicule tels que la batterie, l'habitacle, etc. et de récupérer une partie de l'énergie perdue dissipée par certains composants comme le moteur, l'électronique de puissance, etc. Ainsi, l'installation proposée permet de limiter la consommation d'énergie.

L'installation présente une architecture physique figée tout en permettant de privilégier l'un ou l'autre de certains paramètres comme le confort d'habitacle, le conditionnement de la batterie, de l'autonomie du véhicule, etc.

Par exemple, l'installation peut être pilotée par un programme d'ordinateur. Ainsi, selon le choix du constructeur, le pilotage par le programme d'ordinateur peut amener à des comportements différents du véhicule, sans modification physique des composants.

Selon un autre aspect, il est proposé un véhicule automobile comprenant une installation telle que précitée.

Les caractéristiques exposées dans les paragraphes suivants peuvent, optionnellement, être mises en œuvre, indépendamment les unes des autres ou en combinaison les unes avec les autres :

L'échangeur thermique inter-circuits du circuit caloporteur peut être configuré pour réchauffer et/ou refroidir le fluide réfrigérant. Le quatrième échangeur thermique du circuit réfrigérant peut être configuré pour réchauffer et/ou refroidir le fluide caloporteur.

Le véhicule peut être un véhicule automobile hybride thermique/électrique ou électrique à batteries. Dans le cas d'un véhicule hybride, l'installation peut être adaptée à la partie électrique du véhicule.

Le fluide caloporteur peut être tout type de fluide caloporteur, en particulier un liquide tel que de l'eau glycolée.

Le fluide réfrigérant ou frigorigène peut être tout type de fluide réfrigérant présentant au moins une phase liquide et une phase gazeuse.

Le premier échangeur thermique et le deuxième échangeur thermique peuvent être aptes à échanger de la chaleur avec de l'air circulant dans la cabine du véhicule.

Ledit organe du véhicule peut être une batterie haute tension, un module d'électronique de puissance ou un échangeur d'un moteur de traction.

En particulier, le circuit caloporteur comprend à la fois une batterie haute tension, un module d'électronique de puissance et un échangeur d'un moteur de traction

Selon un premier mode de réalisation du circuit caloporteur, le circuit caloporteur peut comprendre quatre boucles dans lesquelles circule le fluide caloporteur et reliées par une vanne multivoies,
la première boucle B1 comprenant le module d'électronique de puissance et l'échangeur du moteur de traction,
la deuxième boucle B2 comprenant la batterie haute tension,
la troisième boucle B3 comprenant le moyen de chauffage du fluide caloporteur et l'échangeur thermique inter-circuits,
la quatrième boucle B4 comprenant l'échangeur thermique frontal.

Une vanne peut être tout moyen pour contrôler le débit ou stopper du fluide caloporteur.

Selon un second mode de réalisation, le circuit caloporteur peut comprendre trois boucles dans lesquelles circule le fluide caloporteur et reliées par une vanne multivoies, la première boucle B1 comprenant le module d'électronique de puissance, l'échangeur du moteur de traction et l'échangeur thermique frontal,
la deuxième boucle B2 comprenant la batterie haute tension,
la troisième boucle B3 comprenant le moyen de chauffage du fluide caloporteur et l'échangeur thermique inter-circuits.

La première boucle du circuit caloporteur et/ou la troisième boucle du circuit caloporteur peut comprendre une pompe de circulation.

Le moyen de chauffage du circuit caloporteur peut être une résistance électrique simple ou une résistance électrique à coefficient de température positif, (aussi appelée en anglais « positive temperature coefficient » abrégé en PTC).

Selon le premier mode de réalisation du circuit caloporteur, les moyens de circulation du circuit caloporteur peuvent être configurés pour fonctionner selon l'un au moins des modes suivants :
un premier mode dans lequel d'une part la première boucle et la quatrième boucle communiquent de sorte que du fluide caloporteur circule dans la première boucle et la quatrième boucle, et d'autre part la deuxième boucle et la troisième boucle communiquent de sorte que du fluide caloporteur circule dans la deuxième boucle et la troisième boucle,
un deuxième mode dans lequel les quatre boucles communiquent entre elles de sorte que le fluide caloporteur circule dans les quatre boucles, et
un troisième mode dans lequel la première boucle, la troisième boucle et la quatrième boucle communiquent de sorte que le fluide caloporteur circule dans la première boucle, dans la troisième boucle et dans la quatrième boucle.

Selon le second mode de réalisation du circuit caloporteur, les moyens de circulation du circuit caloporteur peuvent être configurés pour fonctionner selon l'un au moins des modes suivants : un premier mode dans lequel d'une part du fluide caloporteur circule dans la première boucle, et d'autre part la deuxième boucle et la troisième boucle communiquent de sorte que du fluide caloporteur circule dans la deuxième boucle et la troisième boucle,
un deuxième mode dans lequel les trois boucles communiquent entre elles de sorte que le fluide caloporteur circule dans les trois boucles, et
un troisième mode dans lequel la première boucle et la troisième boucle communiquent de sorte que le fluide caloporteur circule dans la première boucle et la troisième boucle.

Selon un mode de réalisation, les moyens de circulation du circuit réfrigérant peuvent être configurés pour fonctionner selon l'un au moins des modes suivants :
un mode A dans lequel le fluide réfrigérant circule selon une boucle comportant au moins successivement le compresseur, le cinquième échangeur thermique et le deuxième échangeur thermique avant de traverser à nouveau le compresseur,
un mode B dans lequel le fluide réfrigérant circule selon une boucle comportant au moins successivement le compresseur , le cinquième échangeur thermique , et le quatrième échangeur thermique avant de traverser à nouveau le compresseur,
un mode C dans lequel le fluide réfrigérant circule selon une boucle comportant au moins successivement le compresseur , le cinquième échangeur thermique , simultanément le quatrième échangeur thermique et le deuxième échangeur thermique avant de traverser à nouveau le compresseur,
un mode D dans lequel le fluide réfrigérant circule selon une boucle comportant au moins successivement le compresseur , simultanément le premier échangeur thermique et le cinquième échangeur thermique , ensuite simultanément le quatrième échangeur thermique et le deuxième échangeur thermique , avant de traverser à nouveau le compresseur,
un mode E dans lequel le fluide réfrigérant circule selon une boucle comportant au moins successivement le compresseur , simultanément le premier échangeur thermique et le quatrième échangeur thermique , ensuite simultanément le cinquième échangeur thermique et le deuxième échangeur thermique avant de traverser à nouveau le compresseur ,
un mode F dans lequel le fluide réfrigérant circule selon une boucle comportant au moins successivement le compresseur , le quatrième échangeur thermique , et le cinquième échangeur thermique avant de traverser à nouveau le compresseur,
un mode G dans lequel le fluide réfrigérant circule selon une boucle comportant au moins successivement le compresseur , le quatrième échangeur thermique , et le deuxième échangeur thermique avant de traverser à nouveau le compresseur,
un mode H dans lequel le fluide réfrigérant circule selon une boucle comportant au moins successivement le compresseur , le quatrième échangeur thermique , simultanément le cinquième échangeur thermique et le deuxième échangeur thermique , avant de traverser à nouveau le compresseur,
un mode I dans lequel le fluide réfrigérant circule selon une boucle comportant au moins successivement le compresseur , le premier échangeur thermique , et le cinquième échangeur thermique avant de traverser à nouveau le compresseur,
un mode J dans lequel le fluide réfrigérant circule selon une boucle comportant au moins successivement le compresseur , le premier échangeur thermique , simultanément le cinquième échangeur thermique et le deuxième échangeur thermique avant de traverser à nouveau le compresseur,
un mode K dans lequel le fluide réfrigérant circule selon une boucle comportant au moins successivement le compresseur , le premier échangeur thermique , et le quatrième échangeur thermique avant de traverser à nouveau le compresseur,
un mode L dans lequel le fluide réfrigérant circule selon une boucle comportant au moins successivement le compresseur , le premier échangeur thermique , simultanément le quatrième échangeur thermique et le deuxième échangeur thermique , avant de traverser à nouveau le compresseur,
un mode M dans lequel le fluide réfrigérant circule selon une boucle comportant au moins successivement le compresseur , simultanément le premier échangeur thermique et le quatrième échangeur thermique, ensuite le cinquième échangeur thermique avant de traverser à nouveau le compresseur,
un mode N dans lequel le fluide réfrigérant circule selon une boucle comportant au moins successivement le compresseur , simultanément le premier échangeur thermique et le cinquième échangeur thermique, ensuite le quatrième échangeur thermique avant de traverser à nouveau le compresseur.

Notamment, les moyens de circulation du circuit réfrigérant peuvent être configurés pour fonctionner selon chacun des modes A à N, de manière sélective.

Le circuit caloporteur peut comprendre un troisième échangeur thermique. Le troisième échangeur thermique du circuit réfrigérant peut comprendre une première entrée/sortie et une seconde entrée/sortie. Le troisième échangeur thermique peut être configuré pour réchauffer le fluide réfrigérant à l'état gazeux avant sa compression et refroidir le fluide réfrigérant après sa condensation. Le troisième échangeur thermique peut être un échangeur réfrigérant/réfrigérant permettant de préchauffer le réfrigérant gazeux avant compression et de refroidir le réfrigérant après condensation. Le troisième échangeur thermique peut être basé sur la technologie d'échangeur de chaleur interne (en anglais « Internal Heat Exchanger » abrégé en « IHX »).

Le circuit réfrigérant peut comprendre en outre :
une première vanne quatre voies et une deuxième vanne quatre voies,
une première vanne d'expansion, une deuxième vanne d'expansion et une troisième vanne d'expansion, et
une vanne de régulation.

Le troisième échangeur thermique et le quatrième échangeur thermique peuvent être disposés dans un bloc réfrigérant du véhicule.

La vanne de régulation peut être une vanne à ouverture progressive.

Chacune des vannes d'expansion peut être configurée pour une fermeture complète du circuit, une très faible ouverture permettant une détente contrôlée du fluide réfrigérant, ou une ouverture totale du circuit.

Chacune des vannes quatre voies peut être une vanne à deux positions. Par exemple, les fonctionnements des vannes quatre voies peuvent être couplés. Dans ce cas, un actionneur commun peut être agencé pour commander le fonctionnement simultané des vannes quatre voies.

La deuxième vanne quatre voies peut être agencée pour relier deux à deux l'un des suivants points du circuit de réfrigérant : un premier embranchement ou point de raccordement, une première entrée/sortie de l'échangeur thermique, une première entrée/sortie de l'échangeur thermique, et un troisième embranchement. La première vanne quatre voies peut être agencée pour relier deux à deux l'un des suivants points du circuit de réfrigérant : un deuxième embranchement, une seconde entrée/sortie de l'échangeur thermique, une seconde entrée/sortie de l'échangeur thermique, et un quatrième embranchement.

Le premier échangeur thermique peut présenter une première entrée/sortie reliée au premier embranchement et une seconde entrée/sortie reliée au second embranchement.

La vanne de régulation peut être agencée sur une première portion du circuit reliant la seconde entrée/sortie au deuxième embranchement. Alternativement, la vanne de régulation peut être agencée sur une portion du circuit reliant le premier embranchement à la première entrée/sortie du premier échangeur thermique.

Le compresseur peut être agencé sur une deuxième portion du circuit reliant le deuxième embranchement à la sortie de la seconde entrée/sortie du troisième échangeur thermique.

Le troisième embranchement peut connecter la sortie de la première entrée/sortie du troisième échangeur thermique, la deuxième vanne quatre voies et une première entrée/sortie du deuxième échangeur thermique. Le quatrième embranchement peut relier l'entrée de l'entrée/sortie du troisième échangeur thermique, la première vanne quatre voies et une seconde entrée/sortie du troisième échangeur thermique.

La première vanne d'expansion peut être disposée dans une troisième portion du circuit reliant le troisième embranchement à la première entrée/sortie du deuxième échangeur thermique. La deuxième vanne d'expansion peut être disposée dans une quatrième portion du circuit réfrigérant reliant la deuxième vanne quatre voies à la première entrée/sortie du quatrième échangeur thermique. La troisième vanne d'expansion peut être disposée dans une cinquième portion du circuit reliant la deuxième vanne quatre voies à la première entrée/sortie du cinquième échangeur thermique.

Selon un mode de réalisation, les moyens de circulation du circuit réfrigérant peuvent être configurés pour fonctionner selon l'un au moins des modes suivants :
un mode A dans lequel le fluide réfrigérant circule selon une boucle comportant au moins successivement le compresseur, le cinquième échangeur thermique, la première entrée/sortie du troisième échangeur thermique, le deuxième échangeur thermique et la seconde entrée/sortie du troisième échangeur thermique,
un mode B dans lequel le fluide réfrigérant circule selon une boucle comportant au moins successivement le compresseur, le cinquième échangeur thermique, la première entrée/sortie du troisième échangeur thermique, le quatrième échangeur thermique et la seconde entrée/sortie du troisième échangeur thermique,
un mode C dans lequel le fluide réfrigérant circule selon une boucle comportant au moins successivement le compresseur, le cinquième échangeur thermique, la première entrée/sortie du troisième échangeur thermique, simultanément le quatrième échangeur thermique et le deuxième échangeur thermique, ensuite la seconde entrée/sortie du troisième échangeur thermique,
un mode D dans lequel le fluide réfrigérant circule selon une boucle comportant au moins successivement le compresseur, simultanément le premier échangeur thermique et le cinquième échangeur thermique, ensuite successivement la première entrée/sortie du troisième échangeur thermique, simultanément le quatrième échangeur thermique et le deuxième échangeur thermique, ensuite la seconde entrée/sortie du troisième échangeur thermique,
un mode E dans lequel le fluide réfrigérant circule selon une boucle comportant au moins successivement le compresseur, simultanément le premier échangeur thermique et le quatrième échangeur thermique, ensuite successivement la première entrée/sortie du troisième échangeur thermique, simultanément le cinquième échangeur thermique et le deuxième échangeur thermique, ensuite la seconde entrée/sortie du troisième échangeur thermique,
un mode F dans lequel le fluide réfrigérant circule selon une boucle comportant au moins successivement le compresseur, le quatrième échangeur thermique, la première entrée/sortie du troisième échangeur thermique, le cinquième échangeur thermique, et la seconde entrée/sortie du troisième échangeur thermique,
un mode G dans lequel le fluide réfrigérant circule selon une boucle comportant au moins successivement le compresseur, le quatrième échangeur thermique, la première entrée/sortie du troisième échangeur thermique, le deuxième échangeur thermique et la seconde entrée/sortie du troisième échangeur thermique
un mode H dans lequel le fluide réfrigérant circule selon une boucle comportant au moins successivement le compresseur, le quatrième échangeur thermique, la première entrée/sortie du troisième échangeur thermique, simultanément le cinquième échangeur thermique et le deuxième échangeur thermique, ensuite la seconde entrée/sortie du troisième échangeur thermique,
un mode I dans lequel le fluide réfrigérant circule selon une boucle comportant au moins successivement le compresseur, le premier échangeur thermique, la première entrée/sortie du troisième échangeur thermique, le cinquième échangeur thermique et la seconde entrée/sortie du troisième échangeur thermique,
un mode J dans lequel le fluide réfrigérant circule selon une boucle comportant au moins successivement le compresseur, le premier échangeur thermique, la première entrée/sortie du troisième échangeur thermique, simultanément le cinquième échangeur thermique et le deuxième échangeur thermique, ensuite la seconde entrée/sortie du troisième échangeur thermique,
un mode K dans lequel le fluide réfrigérant circule selon une boucle comportant au moins successivement le compresseur, le premier échangeur thermique, la première entrée/sortie du troisième échangeur thermique, le quatrième échangeur thermique et la seconde entrée/sortie du troisième échangeur thermique,
un mode L dans lequel le fluide réfrigérant circule selon une boucle comportant au moins successivement le compresseur, le premier échangeur thermique, la première entrée/sortie du troisième échangeur thermique, simultanément le quatrième échangeur thermique et le deuxième échangeur thermique, ensuite la seconde entrée/sortie du troisième échangeur thermique,
un mode M dans lequel le fluide réfrigérant circule selon une boucle comportant au moins successivement le compresseur, simultanément le premier échangeur thermique et le quatrième échangeur thermique, ensuite successivement la première entrée/sortie du troisième échangeur thermique, le cinquième échangeur thermique, et la seconde entrée/sortie du troisième échangeur thermique,
un mode N dans lequel le fluide réfrigérant circule selon une boucle comportant au moins successivement le compresseur, simultanément le premier échangeur thermique et le cinquième échangeur thermique, ensuite successivement la première entrée/sortie du troisième échangeur thermique, le quatrième échangeur thermique et la seconde entrée/sortie du troisième échangeur thermique.

Notamment, les moyens de circulation du circuit réfrigérant peuvent être configurés pour fonctionner selon chacun des modes A à N, de manière sélective.

Dans le mode A, la vanne de régulation et la deuxième vanne d'expansion peuvent être complètement fermées. La troisième vanne d'expansion peut être complètement ouverte. La première vanne d'expansion peut être en mode régulation.

Dans le mode G, la vanne de régulation et la troisième vanne d'expansion peuvent être complètement fermées. La deuxième vanne d'expansion peut être complètement ouverte. La première vanne d'expansion peut être en mode régulation.

Dans le mode B, la vanne de régulation et la première vanne d'expansion peuvent être complètement fermées. La troisième vanne d'expansion peut être complètement ouverte. La deuxième vanne d'expansion peut être en mode régulation.

Dans le mode C, la vanne de régulation peut être complètement fermée. La troisième vanne d'expansion peut être complètement ouverte. La première vanne d'expansion et la deuxième vanne d'expansion peuvent être en mode régulation.

Dans le mode H, la vanne de régulation peut être complètement fermée. La deuxième vanne d'expansion peut être complètement ouverte. La première vanne d'expansion et la troisième vanne d'expansion peuvent être en mode régulation.

Dans le mode I, la première vanne d'expansion et la deuxième vanne d'expansion peuvent être complètement fermées. La vanne de régulation peut être complètement ouverte. La troisième vanne d'expansion peut être en mode régulation.

Dans le mode J, la deuxième vanne d'expansion peut être complètement fermée. La vanne de régulation peut être complètement ouverte. La première vanne d'expansion et la troisième vanne d'expansion peuvent être en mode régulation.

Dans le mode K, la première vanne d'expansion et la troisième vanne d'expansion peuvent être complètement fermées. La vanne de régulation peut être complètement ouverte. La deuxième vanne d'expansion peut être en mode régulation.

Dans le mode L, la troisième vanne d'expansion peut être complètement fermée. La vanne de régulation peut être complètement ouverte. La première vanne d'expansion et la deuxième vanne d'expansion peuvent être en mode régulation.

Dans le mode N, la première vanne d'expansion peut être complètement fermée. La vanne de régulation et la troisième vanne d'expansion peuvent être complètement ouvertes. La deuxième vanne d'expansion peut être en mode régulation.

Dans le mode F, la vanne de régulation et la première vanne d'expansion peuvent être complètement fermées. La deuxième vanne d'expansion peut être complètement ouverte. La troisième vanne d'expansion peut être en mode régulation.

Dans le mode M, la première vanne d'expansion peut être complètement fermée. La vanne de régulation et la deuxième vanne d'expansion peuvent être complètement ouvertes. La troisième vanne d'expansion peut être en mode régulation.

Dans le mode D, la troisième vanne d'expansion et la vanne de régulation peuvent être complètement ouvertes. La première vanne d'expansion et la deuxième vanne d'expansion peuvent être en mode régulation.

Dans le mode E, la deuxième vanne d'expansion et la vanne de régulation peuvent être complètement ouvertes. La première vanne d'expansion et la troisième vanne d'expansion peuvent être en mode régulation.

La combinaison des quatorze modes du circuit réfrigérant (A à N) avec les trois modes du circuit caloporteur donne la possibilité d'obtenir 42 modes différents pour gestion thermique du véhicule.

### Brève description des dessins

D'autres caractéristiques, détails et avantages apparaîtront à la lecture de la description détaillée ci-après, et à l'analyse des dessins annexés, sur lesquels :
**Fig. 1**

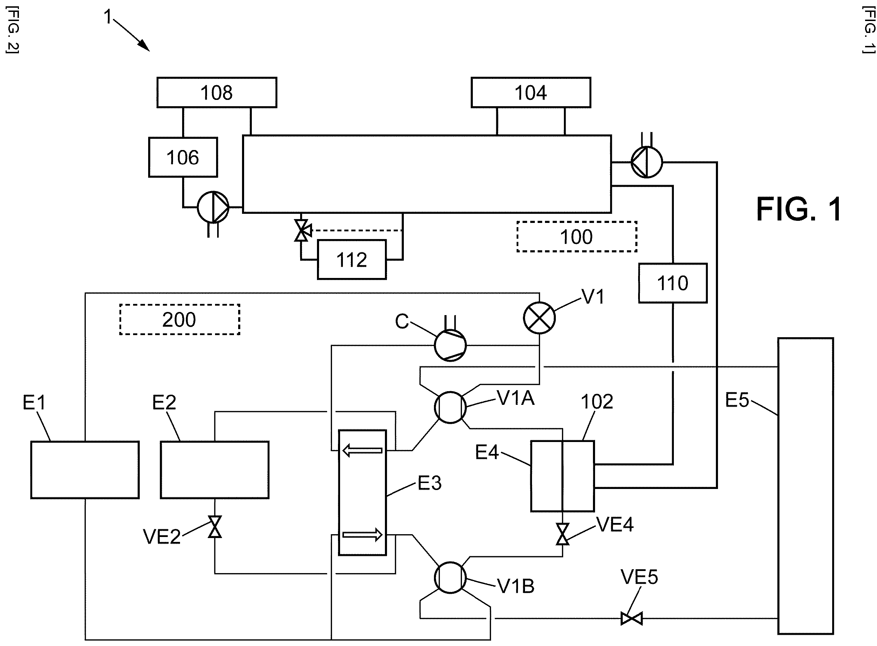

   [Fig. 1] montre une installation de conditionnement thermique selon un mode de réalisation.
**Fig. 2**

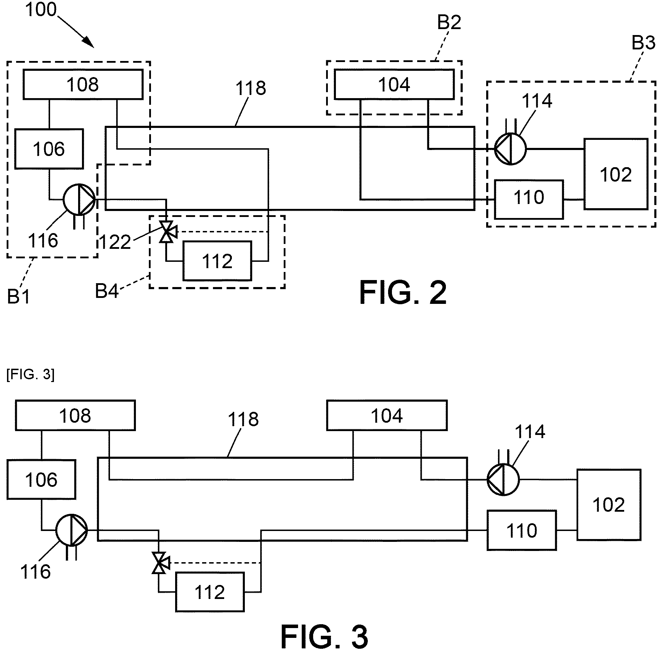

   [Fig. 2] montre un premier mode de fonctionnement d'un circuit caloporteur de l'installation de la figure 1 selon un premier mode de réalisation.
**Fig. 3**
   [Fig. 3] montre un deuxième mode de fonctionnement du circuit caloporteur de l'installation de la figure 1 selon le premier mode de réalisation.
**Fig. 4**

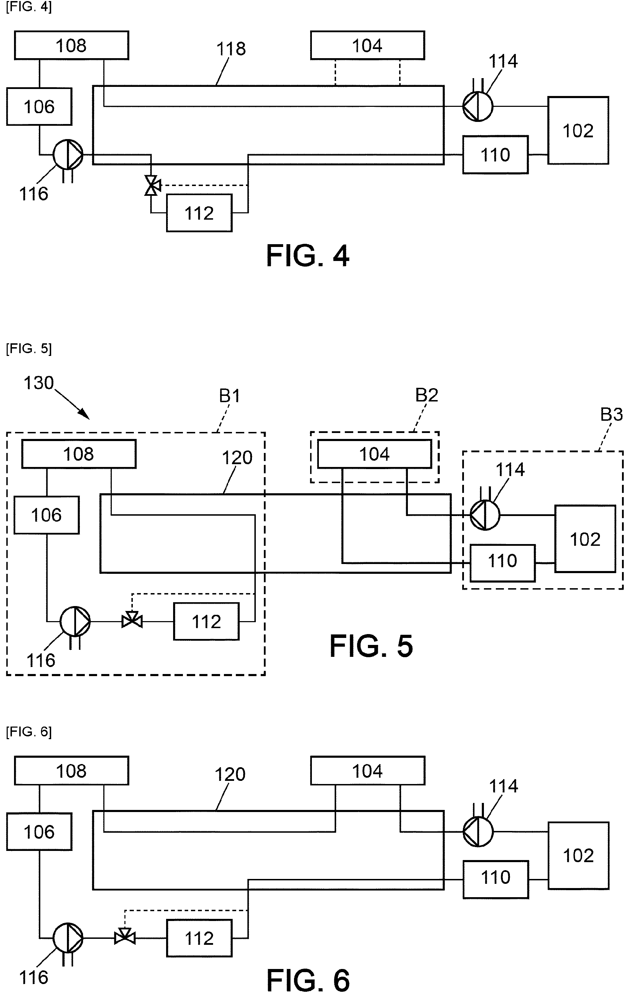

   [Fig. 4] montre un troisième mode de fonctionnement du circuit caloporteur de l'installation de la figure 1 selon le premier mode de réalisation.
**Fig. 5**
   [Fig. 5] montre un premier mode de fonctionnement d'un circuit caloporteur de l'installation de la figure 1 selon un deuxième mode de réalisation.
**Fig. 6**
   [Fig. 6] montre un deuxième mode de fonctionnement du circuit caloporteur de l'installation de la figure 1 selon le deuxième mode de réalisation.
**Fig. 7**

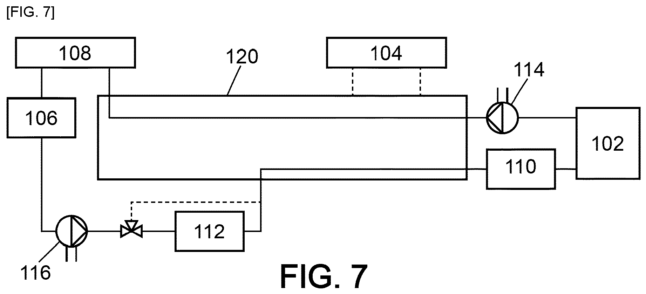

   [Fig. 7] montre un troisième mode de fonctionnement du circuit caloporteur de l'installation de la figure 1 selon le deuxième mode de réalisation.
**Fig. 8**

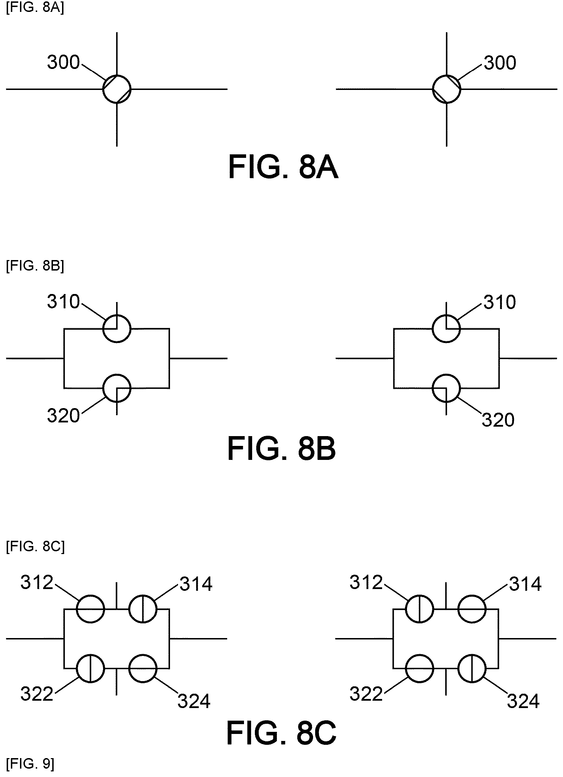

   [Fig. 8A], [Fig. 8B] et [Fig. 8C] les figures 8a, 8b et 8c montrent différents modes de réalisation d'une vanne apte à être utilisée dans l'installation de la figure 1.
**Fig. 9**

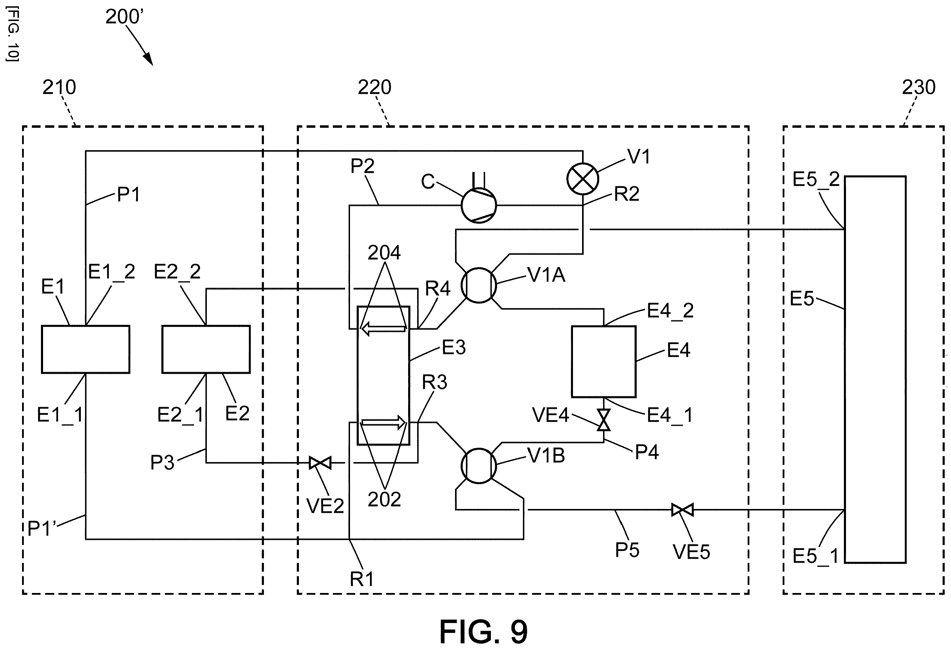

   [Fig. 9] montre un premier mode de réalisation d'un circuit réfrigérant de l'installation de la figure 1.
**Fig. 10**

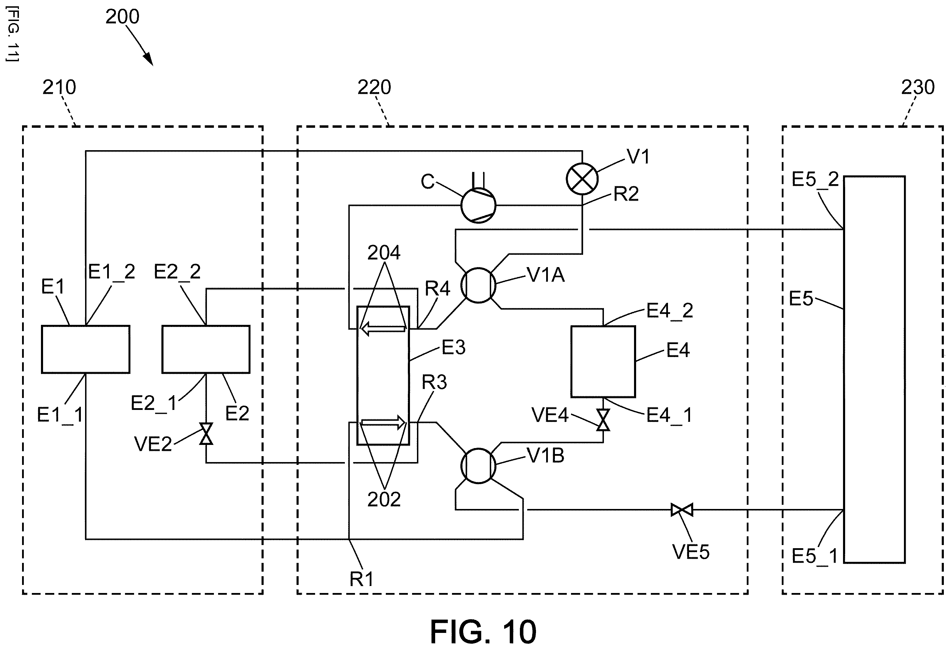

   [Fig. 10] montre un second mode de réalisation d'un circuit réfrigérant de l'installation de la figure 1.
**Fig. 11 à Fig. 24**

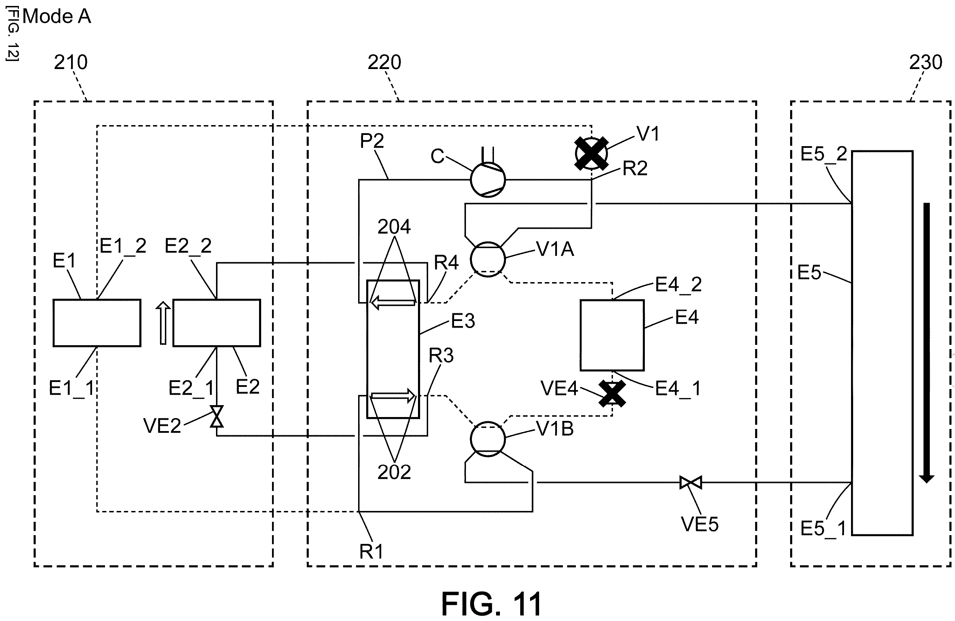

   [**Fig. 11 à Fig. 24**] sont des vues schématiques correspondant à la figure 10 et illustrant différents modes de fonctionnement du circuit réfrigérant.
**Fig. 25 à Fig. 31**
   [**Fig. 25 à Fig. 31**] montrent l'installation de la figure 1 selon différents exemples de fonctionnement.

### Description des modes de réalisation

La figure 1 montre un schéma d'une installation 1 de conditionnement thermique d'un habitacle et/ou d'au moins un organe d'un véhicule à propulsion hybride ou électrique. L'installation 1 comprend un circuit caloporteur 100, représenté plus en détail aux figures 2 à 7, dans lequel circule un fluide caloporteur, et un circuit réfrigérant 200, représenté plus en détail aux figures 9 à 24, dans lequel circule un fluide réfrigérant.

Le fluide caloporteur peut être de tout type de fluide caloporteur en particulier un liquide tel que de l'eau glycolée. Le fluide réfrigérant ou frigorigène peut être de tout type de fluide réfrigérant présentant au moins une phase liquide et une phase gazeuse.

Les figures 2, 3 et 4 représentent le circuit caloporteur 100 selon un premier mode de réalisation, et les figures 5, 6 et 7 représentent un circuit caloporteur 130 selon un second mode de réalisation du circuit caloporteur.

En référence aux figures 2 à 4, le circuit caloporteur 100 comprend :
- des organes du véhicule comprenant une batterie haute tension 104, un échangeur thermique du moteur de traction 106 et un module d'électronique de puissance 108,
- un moyen de chauffage 110 du fluide caloporteur,
- un échangeur thermique inter-circuits 102,
- un échangeur thermique frontal 112 apte à échanger de la chaleur avec de l'air extérieur au véhicule,
- une première pompe 114,
- une seconde pompe 116,
- une vanne de court-circuit 122, et
- une vanne huit voies 118.

Le moyen de chauffage 110 peut être une résistance électrique simple ou une résistance électrique à coefficient de température positif, (aussi appelée en anglais « positive temperature coefficient » abrégé en PTC). La première pompe 114 et la seconde pompe 116 sont des pompes de circulation et peuvent être entrainées par des moteurs électriques.

Le circuit caloporteur 100 est formé par quatre boucles :
une première boucle comprenant le module d'électronique de puissance 108, l'échangeur thermique du moteur de traction 106 et la seconde pompe 116,
une deuxième boucle comprenant la batterie haute tension 104,
une troisième boucle comprenant la première pompe 114, le moyen de chauffage 110 du fluide caloporteur et l'échangeur thermique inter-circuits 102, et
une quatrième boucle comprenant l'échangeur thermique frontal 112 et la vanne de court-circuit 122.

La vanne de court-circuit 122 est reliée d'une part à une portion directement en amont de l'échangeur thermique frontal 112 et d'autre part à une portion directement en aval de l'échangeur thermique 112.

L'amont et l'aval sont définis par rapport au sens de circulation du fluide caloporteur dans le circuit caloporteur 100.

Dans le circuit caloporteur 100, la vanne huit voies 118 est configurée pour fonctionner selon l'un au moins des modes suivants.

Un premier mode de fonctionnement du circuit caloporteur 100 représenté à la figure 2 dans lequel d'une part la première boucle et la quatrième boucle communiquent de sorte que du fluide caloporteur circule dans la première boucle et la quatrième boucle, et d'autre part la deuxième boucle et la troisième boucle communiquent de sorte que du fluide caloporteur circule dans la deuxième boucle et la troisième boucle. Ainsi, une partie du fluide caloporteur circule entre le module d'électronique de puissance 108, l'échangeur thermique du moteur de traction 106, la seconde pompe 116, l'échangeur thermique frontal 112 et la vanne de court-circuit 122. L'autre partie du fluide caloporteur circule entre la batterie haute tension 104, la première pompe 114, le moyen de chauffage 110 du fluide caloporteur et l'échangeur thermique inter-circuits 102.

Un deuxième mode de fonctionnement du circuit caloporteur 100 est représenté à la figure 3 dans lequel les quatre boucles communiquent entre elles de sorte que le fluide caloporteur circule dans les quatre boucles. Ainsi, le fluide caloporteur circule entre la batterie haute tension 104, l'échangeur thermique du moteur de traction 106, le module d'électronique de puissance 108, le moyen de chauffage 110 du fluide caloporteur, l'échangeur thermique inter-circuits 102, l'échangeur thermique frontal 112, la première pompe 114, la seconde pompe 116, la vanne de court-circuit 122, et la vanne huit voies 118.

Un troisième mode de fonctionnement du circuit caloporteur 100 est représenté à la figure 4 dans lequel la première boucle, la troisième boucle et la quatrième boucle communiquent de sorte que le fluide caloporteur circule dans la première boucle et la quatrième boucle. Ainsi, le fluide caloporteur circule entre l'échangeur thermique du moteur de traction 106, le module d'électronique de puissance 108, le moyen de chauffage 110 du fluide caloporteur, l'échangeur thermique inter-circuits 102, l'échangeur thermique frontal 112, la première pompe 114, la seconde pompe 116, la vanne de court-circuit 122, et la vanne huit voies 118. Dans ce mode de fonctionnement, le fluide ne circule pas dans la batterie haute tension 104.

En référence aux figures 5 à 7, le circuit caloporteur 130 comprend les mêmes éléments que le circuit caloporteur 100. A la différence du circuit caloporteur 100, le circuit caloporteur 130 comprend une vanne six voies 120.

Le circuit caloporteur 130 est formé par trois boucles :
une première boucle comprenant le module d'électronique de puissance 108, l'échangeur thermique du moteur de traction 106, la seconde pompe 116, la vanne de court-circuit 122 et l'échangeur thermique frontal 112,
une deuxième boucle comprenant la batterie haute tension 104, et
une troisième boucle comprenant la première pompe 114, le moyen de chauffage 110 du fluide caloporteur et l'échangeur thermique inter-circuits 102.

Dans le circuit caloporteur 130, la vanne six voies 120 est configurée pour fonctionner selon l'un au moins des modes suivants.

Un premier mode de fonctionnement du circuit caloporteur 130 est représenté à la figure 5 dans lequel d'une part une partie du fluide caloporteur circule dans la première boucle, et d'autre part la deuxième boucle et la troisième boucle communiquent de sorte que l'autre partie du fluide caloporteur circule dans la deuxième boucle et la troisième boucle. Ainsi, une partie du fluide caloporteur fluide caloporteur circule entre le module d'électronique de puissance 108, l'échangeur thermique du moteur de traction 106, la seconde pompe 116, l'échangeur thermique frontal 112 et la vanne de court-circuit 122. L'autre partie du fluide caloporteur circule entre la batterie haute tension 104, la première pompe 114, le moyen de chauffage 110 du fluide caloporteur et l'échangeur thermique inter-circuits 102.

Un deuxième mode de fonctionnement du circuit caloporteur 130 est représenté à la figure 6 dans lequel les trois boucles communiquent entre elles de sorte que le fluide caloporteur circule dans les trois boucles. Ainsi, le fluide caloporteur circule entre la batterie haute tension 104, l'échangeur thermique du moteur de traction 106, le module d'électronique de puissance 108, le moyen de chauffage 110 du fluide caloporteur, l'échangeur thermique inter-circuits 102, l'échangeur thermique frontal 112 apte à échanger de la chaleur avec de l'air extérieur au véhicule, la première pompe 114, la seconde pompe 116, la vanne de court-circuit 122, et la vanne huit voies 118.

Un troisième mode de fonctionnement du circuit caloporteur 130 est représenté à la figure 7 dans lequel la première boucle et la troisième boucle communiquent de sorte que le fluide caloporteur circule dans la première boucle et la troisième boucle. Ainsi, le fluide caloporteur circule entre l'échangeur thermique du moteur de traction 106, le module d'électronique de puissance 108, le moyen de chauffage 110 du fluide caloporteur, l'échangeur thermique inter-circuits 102, l'échangeur thermique frontal 112, la première pompe 114, la seconde pompe 116, la vanne de court-circuit 122, et la vanne huit voies 118. Dans ce mode de fonctionnement, le fluide ne circule pas dans la batterie haute tension 104.

La figure 9 représente un premier exemple de réalisation du circuit réfrigérant 200' qui comprend :
un compresseur C,
un premier échangeur thermique E1 formant un condenseur et particulièrement agencé dans un habitacle 210 ou une cabine du véhicule,
un deuxième échangeur thermique E2 formant un évaporateur et particulièrement arrangé dans l'habitacle 210 du véhicule,
un troisième échangeur thermique E3 comprenant une première entrée/sortie 202 et une deuxième entrée/sortie 204,
un quatrième échangeur thermique E4 configuré pour échanger de la chaleur avec le circuit caloporteur 100 ou le circuit caloporteur 130,
un cinquième échangeur thermique E5 apte à échanger de la chaleur avec de l'air extérieur au véhicule, en particulier arrangé au niveau de la face avant 230 du véhicule, le cinquième échangeur thermique E5 pouvant être utilisé en évaporateur ou en condenseur,
des moyens de circulation du fluide réfrigérant aptes à faire circuler le fluide caloporteur entre les échangeurs thermiques E1, E2, E3, E4 et E5 du circuit réfrigérant 200',
deux vannes quatre voies V1A et V1B,
trois vannes d'expansion VE2, VE4 et VE5, et
une vanne de régulation V1.

Le troisième échangeur thermique E3 et le quatrième échangeur thermique E4 peuvent être disposés dans le bloc réfrigérant 220 du véhicule.

En particulier, le troisième échangeur thermique E3 est un échangeur réfrigérant/réfrigérant permettant de préchauffer le réfrigérant gazeux avant compression et de refroidir le réfrigérant liquide après condensation. Le troisième échangeur thermique E3 peut être basé sur la technologie d'échangeur de chaleur interne (en anglais « Internal Heat Exchanger » abrégé en « IHX »).

La vanne de régulation V1 peut être une vanne à ouverture progressive.

Chacune des vannes d'expansion VE2, VE4 et VE5 peut être configurée pour une fermeture complète du circuit, une très faible ouverture permettant une détente contrôlée du fluide réfrigérant, ou une ouverture totale du circuit.

Chacune des vannes quatre voies V1A et V1B peut être une vanne à deux positions. Par exemple, les fonctionnements des vannes quatre voies V1A et V1B peuvent être couplés. Dans ce cas, un actionneur commun peut être agencé pour commander le fonctionnement simultané des vannes quatre voies V1A et V1B.

La vanne quatre voies V1B permet de relier deux à deux l'un des suivants points du circuit de réfrigérant 200' : un embranchement ou point de raccordement R1, une première entrée/sortie E5_1 de l'échangeur thermique E5, une première entrée/sortie E4_1 de l'échangeur thermique E4, et un embranchement R3. La vanne quatre voies V1A permet de relier deux à deux l'un des suivants points du circuit de réfrigérant 200' : un embranchement R2, une seconde entrée/sortie E5_2 de l'échangeur thermique E5, une seconde entrée/sortie E4_2 de l'échangeur thermique E4, et un embranchement R4.

L'échangeur thermique E1 présente une première entrée/sortie E1_1 reliée à l'embranchement R1 et une seconde entrée/sortie E1_2 reliée à l'embranchement R2.

La vanne de régulation V1 est agencée sur une portion du circuit P1 reliant la seconde entrée/sortie E1_2 à l'embranchement R2. Alternativement, la vanne de régulation V1 peut être agencée sur une portion du circuit P1' reliant l'embranchement R1 à la première entrée/sortie E1_1 du premier échangeur thermique E1.

Le compresseur C est agencé sur une portion du circuit P2 reliant l'embranchement R2 à la sortie de la seconde entrée/sortie 204 du troisième échangeur thermique E3.

L'embranchement R3 connecte la sortie de la première entrée/sortie 202 du troisième échangeur thermique E3, la vanne quatre voies V1B et une première entrée/sortie E2_1 du deuxième échangeur thermique E2. L'embranchement R4 connecte l'entrée de l'entrée/sortie 204 du troisième échangeur thermique E3, la vanne quatre voies V1A et une seconde entrée/sortie E2_2 du troisième échangeur thermique E2.

La vanne d'expansion VE2 est disposée dans une portion du circuit P3 reliant l'embranchement R3 à la première entrée/sortie E2_1 du deuxième échangeur thermique E2. La vanne d'expansion VE4 est disposée dans une portion du circuit P4 reliant la vanne quatre voies V1B à la première entrée/sortie E4_1 du quatrième échangeur thermique E4. La vanne d'expansion VE5 est disposée dans une portion du circuit P5 reliant la vanne quatre voies V1B à la première entrée/sortie E5_1 du cinquième échangeur thermique E5.

Dans le circuit réfrigérant 200', la vanne d'expansion VE2 est agencée dans l'habitacle 210 du véhicule.

La figure 9 représente un second exemple de réalisation du circuit réfrigérant 200 comprenant les mêmes éléments que le circuit réfrigérant 200' à la différence que la vanne d'expansion VE2 est agencée dans le bloc réfrigérant 220 du véhicule au lieu d'être installée dans l'habitacle 210 du véhicule.

La figure 8A représente un mode de réalisation d'une vanne quatre voie qui peut être la vanne V1A ou V1B. En fonction des contraintes techniques de réalisation, au moins l'une des vannes quatre voies V1A et V1B peut être remplacée par un agencement de deux vannes 310 et 320 du type vanne trois voies tout-ou-rien, comme représenté sur la figure 8B.

Au moins l'une des vannes quatre voies V1A et V1B peut être remplacée par un agencement de quatre vannes 312, 314, 322 et 324 du type vanne deux voies tout-ou-rien, comme représenté sur la figure 8C.

Les différents modes de fonctionnement du circuit caloporteur sont décrits dans la suite pour le circuit réfrigérant 200 de la figure 10 mais sont aussi valables pour le circuit réfrigérant 200' de la figure 9.

La combinaison des deux positions des vannes V1A et V1B avec les deux positions de V1 et les trois états des vannes d'expansion VE2, VE4 et VE5 permettent de faire fonctionner le circuit caloporteur selon l'une des 14 états de fonctionnement suivants.

La figure 11 représente un mode A de fonctionnement du circuit réfrigérant 200 dans lequel le fluide réfrigérant issu du compresseur C traverse successivement la vanne V1A, la seconde entrée/sortie E5_2 du cinquième échangeur thermique E5, la vanne d'expansion VE5, la vanne V1B, la première entrée/sortie 202 du troisième échangeur thermique E3, la vanne d'expansion VE2, la première entrée/sortie E2_1 du deuxième échangeur thermique E2 et la seconde entrée/sortie 204 du troisième échangeur thermique E3 avant de traverser à nouveau le compresseur C.

Le mode A représente un mode de climatisation de base, utilisé pour refroidir uniquement la température habitacle.

Dans le mode A, le réfrigérant est condensé dans le cinquième échangeur thermique E5, et est détendu par la vanne d'expansion VE2 et subit une évaporation dans le deuxième échangeur thermique E2, ce qui crée un flux d'air froid qui est diffusé dans la cabine du véhicule.

Dans le mode A, le troisième échangeur thermique E3 assure par échange thermique interne le réchauffage avant compression du gaz évaporé dans l'échangeur E2 et le refroidissement du fluide condensé dans l'échangeur E5.

Dans le mode A, la vanne de régulation V1 et la vanne d'expansion VE4 sont complètement fermées. La vanne d'expansion VE5 est complètement ouverte. La vanne d'expansion VE2 est en mode régulation.

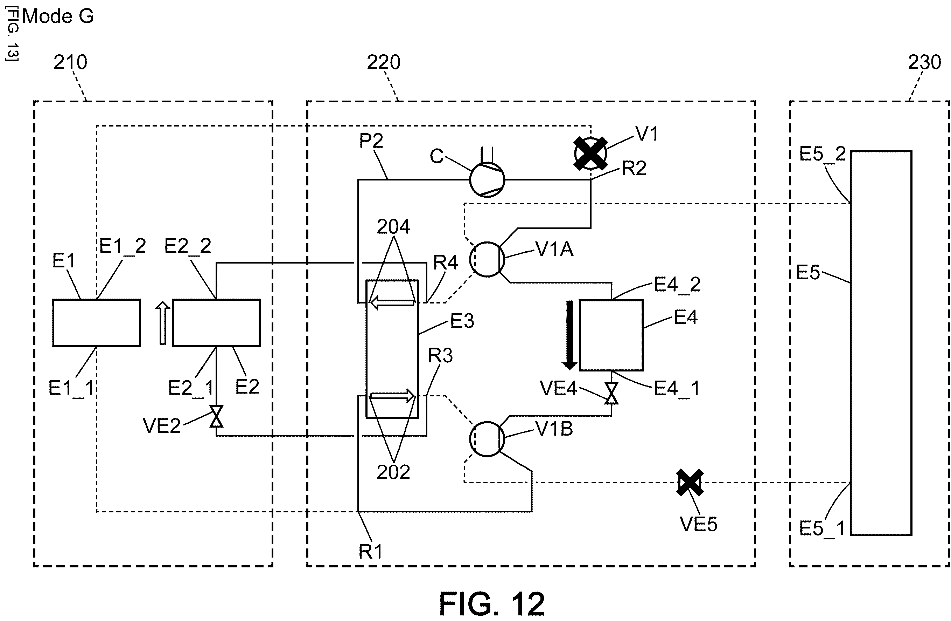

La figure 12 représente un mode G de fonctionnement du circuit réfrigérant 200 dans lequel le fluide réfrigérant issu du compresseur C traverse successivement la vanne V1A, le quatrième échangeur thermique E4, la vanne d'expansion VE4, la banne V1B, la première entrée/sortie du troisième échangeur thermique E3, la vanne d'expansion VE2, le deuxième échangeur thermique E2 et la seconde entrée/sortie du troisième échangeur thermique E3 avant de traverser à nouveau le compresseur C.

Le mode G est un mode de climatisation de base de l'habitacle couplé avec un échange thermique avec le circuit caloporteur 100 pour le chauffage de la batterie haute tension 104 et/ou le module d'électronique de puissance 108.

Dans le mode G, le réfrigérant est condensé dans le quatrième échangeur thermique E4, permettant le chauffage du fluide caloporteur, le réfrigérant est ensuite détendu par la vanne d'expansion VE2 et subit une évaporation dans le deuxième thermique E2, créant un flux d'air froid qui est diffusé dans la cabine du véhicule.

Dans le mode G, le troisième échangeur thermique E3 assure par échange thermique interne le réchauffage avant compression du gaz évaporé dans l'échangeur E2 et le refroidissement du fluide condensé dans l'échangeur E4.

Dans le mode G, la vanne de régulation V1 et la vanne d'expansion VE5 sont complètement fermées. La vanne d'expansion VE4 est complètement ouverte. La vanne d'expansion VE2 est en mode régulation.

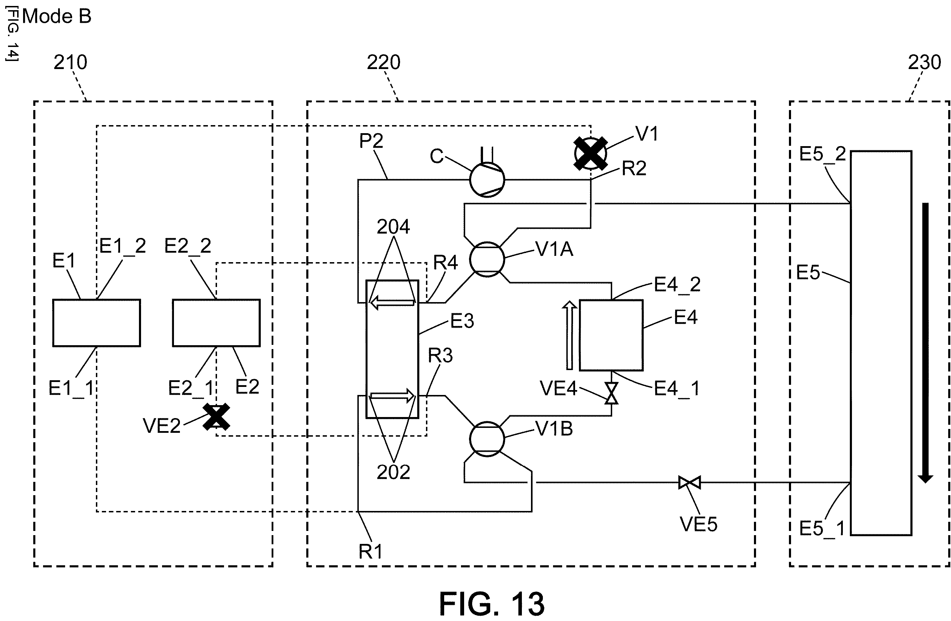

La figure 13 représente un mode B de fonctionnement du circuit réfrigérant 200 dans lequel le fluide réfrigérant issu du compresseur C traverse successivement la vanne V1A, la seconde entrée/sortie E5_2 du cinquième échangeur thermique E5, la vanne d'expansion VE5, la vanne V1B, la première entrée/sortie 202 du troisième échangeur thermique E3, la vanne VE4, la première entrée/sortie E4_1 de le quatrième échangeur E4, la seconde entrée/sortie E4_2 du quatrième échangeur E4, la vanne V1A et la seconde entrée/sortie 204 du troisième échangeur thermique E3 avant de traverser à nouveau le compresseur C.

Le mode B est un mode basique de refroidissement forcé de la batterie haute tension 104 et/ou du module d'électronique de puissance 108. Dans ce mode, l'habitacle du véhicule n'est pas régulé en température.

Dans le mode B le réfrigérant est condensé dans le cinquième échangeur thermique E5, est détendu par la vanne d'expansion VE4 et est évaporé dans le quatrième échangeur thermique E4, ce qui refroidit le fluide caloporteur qui est dirigé ensuite vers la batterie haute tension 104 et/ou le module d'électronique de puissance 108, en fonction du mode de fonctionnement du circuit caloporteur 100.

Dans le mode B, le troisième échangeur thermique E3 assure par échange thermique interne le réchauffage avant compression du gaz évaporé dans l'échangeur E4 et le refroidissement du fluide condensé dans l'échangeur E5.

Dans le mode B, la vanne de régulation V1 et la vanne d'expansion VE2 sont complètement fermées. La vanne d'expansion VE5 est complètement ouverte. La vanne d'expansion VE4 est en mode régulation.

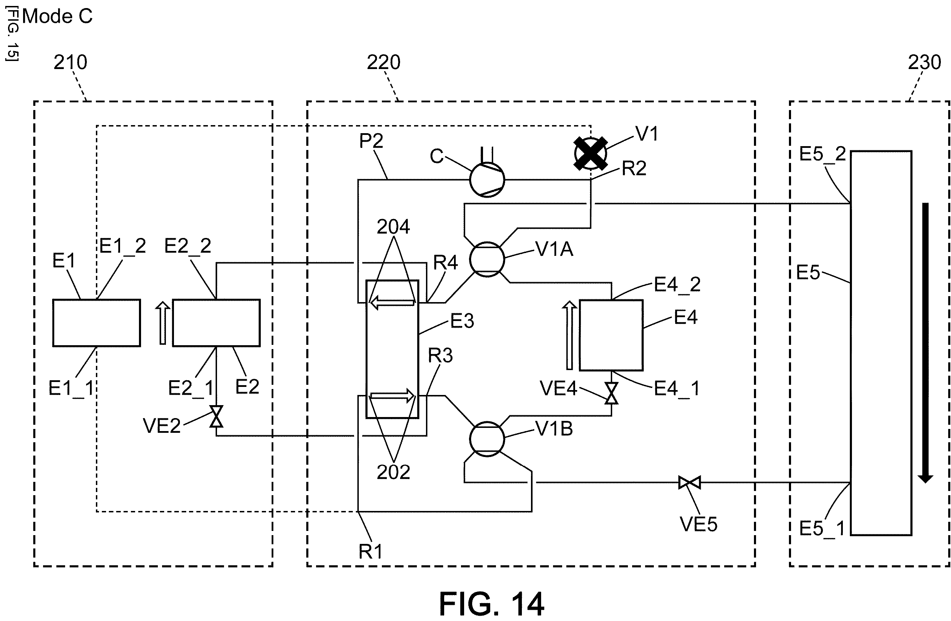

La figure 14 représente un mode C de fonctionnement du circuit réfrigérant 200 dans lequel le fluide réfrigérant issu du compresseur C traverse successivement, la seconde entrée/sortie E5_2 du cinquième échangeur thermique E5, la première entrée/sortie E5_1 du cinquième échangeur thermique E5, la vanne d'expansion VE5, la vanne V1B, la première entrée/sortie 202 du troisième échangeur thermique E3. Au niveau de l'embranchement R3, une partie du fluide réfrigérant traverse successivement la vanne V1B, la vanne d'expansion VE4, la première entrée/sortie E4_1 du quatrième échangeur thermique E4 et la seconde entrée/sortie E4_2 du quatrième échangeur E4_1 pour ensuite rejoindre l'autre partie du fluide réfrigérant au niveau de l'embranchement R4. L'autre partie du fluide réfrigérant, en partant de l'embranchement R3, traverse successivement la vanne d'expansion VE2, la première entrée/sortie E2_1 du deuxième échangeur thermique E2, la seconde entrée/sortie E2_2 du deuxième échangeur thermique E2 pour rejoindre le reste du fluide réfrigérant au niveau de l'embranchement R4 qui traverse ensuite la seconde entrée/sortie 204 du troisième échangeur thermique E3 avant de traverser à nouveau le compresseur C.

Le mode C est un mode combiné permettant un refroidissement simultané de l'habitacle 210 et de la batterie haute tension 104 et/ou du module d'électronique de puissance 108.

Dans le mode C, le réfrigérant est condensé dans le cinquième échangeur E5, une partie est détendue par VE2 et évaporée dans E2, ce qui crée un flux d'air froid vers la cabine, l'autre partie est détendue par VE4 et évaporée dans E4, ce qui refroidit le fluide caloporteur qui est dirigé vers la batterie et/ou l'électronique de puissance.

Dans le mode C, le troisième échangeur thermique E3 assure par échange thermique interne le réchauffage avant compression du gaz évaporé dans les échangeurs E2 et E4 et le refroidissement du fluide condensé dans l'échangeur E5.

Dans le mode C, la vanne de régulation V1 est complètement fermée. La vanne d'expansion VE5 est complètement ouverte. La vanne d'expansion VE2 et la vanne d'expansion VE4 sont en mode régulation.

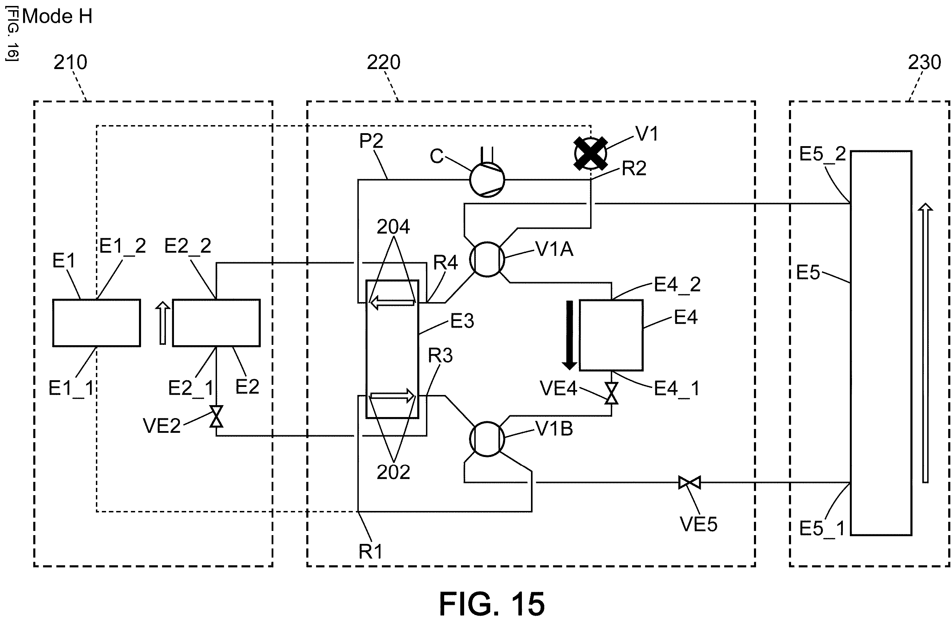

La figure 15 représente un mode H de fonctionnement du circuit réfrigérant 200 dans lequel le fluide réfrigérant issu du compresseur C traverse successivement, la vanne V1A, la seconde entrée/sortie E4_2 du quatrième échangeur thermique E4, la première entrée/sortie E4_1 du quatrième échangeur thermique E4, la vanne d'expansion VE4, la vanne V1B et la première entrée/sortie 202 du troisième échangeur thermique E3. Ensuite, au niveau de l'embranchement R3, une partie du fluide réfrigérant traverse successivement la vanne V1B, la vanne d'expansion VE5, la première entrée/sortie E5_1 du cinquième échangeur thermique E5, la seconde entrée/sortie E5_2 du cinquième échangeur thermique E5, la vanne V1A pour rejoindre l'autre partie du fluide à l'embranchement R4. L'autre partie du fluide réfrigérant, en partant de l'embranchement R3, traverse successivement la vanne d'expansion VE2, la première entrée/sortie E2_1 du deuxième échangeur thermique E2, la seconde entrée/sortie E2_1 du deuxième échangeur thermique E2 pour rejoindre le reste du fluide réfrigérant à l'embranchement R4 qui traverse ensuite la seconde entrée/sortie 204 du troisième échangeur thermique E3 avant de traverser à nouveau le compresseur C.

Le mode H est un mode combiné permettant un refroidissement simultané de l'habitacle 210 du véhicule et le chauffage de la batterie haute tension 104 et/ou du module d'électronique de puissance 108.

Dans le mode H, le fluide réfrigérant est condensé dans le quatrième échangeur thermique E4, chauffant le fluide caloporteur qui est dirigée vers la batterie haute tension 104 et/ou le module d'électronique de puissance 108, une partie du fluide réfrigérant est ensuite détendue par la vanne d'expansion VE2 et est évaporée dans le deuxième échangeur thermique E2, ce qui crée un flux d'air froid vers la cabine 210, l'autre partie du fluide réfrigérant est détendue par la vanne d'expansion VE5 et évaporé dans le cinquième échangeur thermique E5.

Dans le mode H, le troisième échangeur thermique E3 assure par échange thermique interne le réchauffage avant compression du gaz évaporé dans l'échangeur E2 et le refroidissement du fluide condensé dans l'échangeur E4.

Dans le mode H, la vanne de régulation V1 est complètement fermée. La vanne d'expansion VE4 est complètement ouverte. La vanne d'expansion VE2 et la vanne d'expansion VE5 sont en mode régulation.

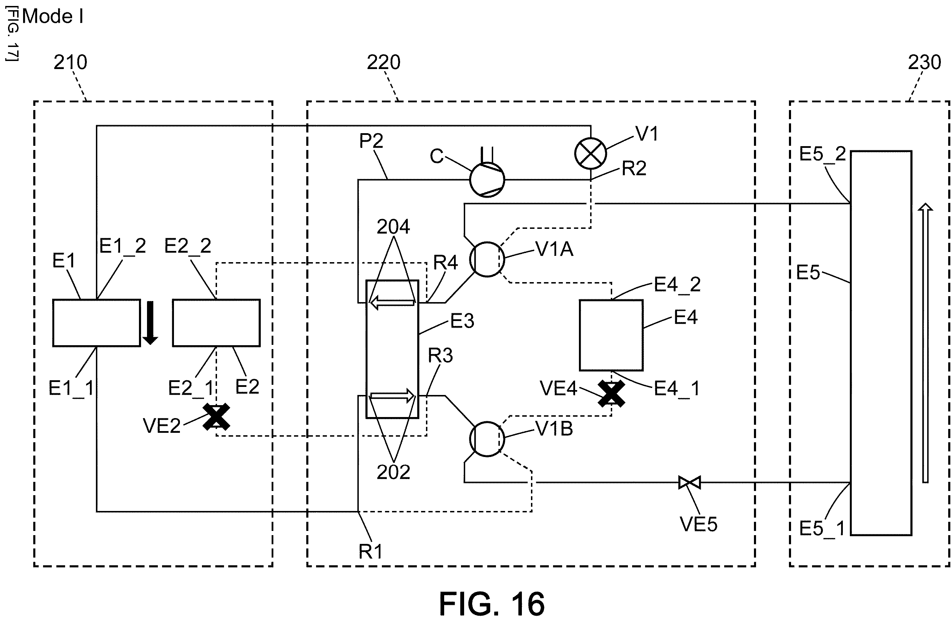

La figure 16 représente un mode I de fonctionnement du circuit réfrigérant 200 dans lequel le fluide réfrigérant issu du compresseur C traverse successivement la vanne de régulation V1 la seconde entrée/sortie E1_2 du premier échangeur thermique E1, la première entrée/sortie E1_1 du premier échangeur thermique E1, la première entrée/sortie 202 du troisième échangeur E3, la vanne V1B, la vanne d'expansion VE5, la première entrée/sortie E5_1 du cinquième échangeur thermique E5, la seconde entrée/sortie E5_2 du cinquième échangeur thermique E5, la vanne V1A, la seconde entrée/sortie 204 du troisième échangeur thermique E3 avant de traverser à nouveau le compresseur C.

Le mode I est un mode basique de réchauffage de l'habitacle 210 par pompe à chaleur.

Dans le mode I, le fluide réfrigérant est condensé dans le premier échangeur thermique E1, ce qui réchauffe l'air envoyé dans l'habitacle 210, puis le fluide est détendu par la vanne d'expansion VE5 et est évaporé dans le cinquième échangeur thermique E5.

Dans le mode I, le troisième échangeur thermique E3 assure par échange thermique interne le réchauffage avant compression du gaz évaporé dans l'échangeur E5 et le refroidissement du fluide condensé dans l'échangeur E1.

Dans le mode I, la vanne d'expansion VE2 et la vanne d'expansion VE4 sont complètement fermées. La vanne de régulation V1 est complètement ouverte. La vanne d'expansion VE5 est en mode régulation.

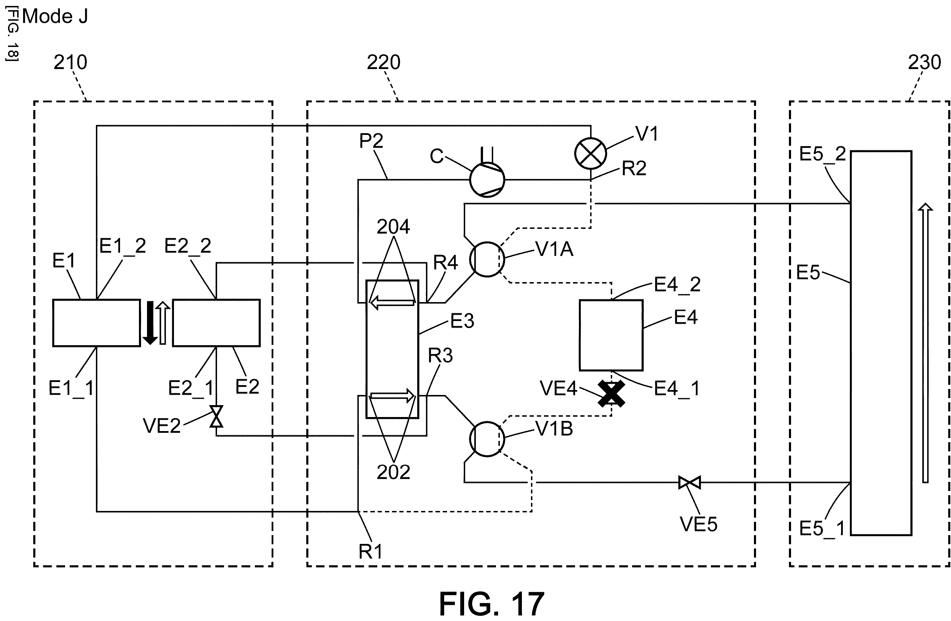

La figure 17 représente un mode J de fonctionnement du circuit réfrigérant 200 dans lequel le fluide réfrigérant issu du compresseur C traverse successivement la vanne V1, la seconde entrée/sortie E1_2 du premier échangeur thermique E1, la première entrée/sortie E1_1 du premier échangeur thermique E1, la première entrée/sortie 202 du troisième échangeur thermique E3. Au niveau de l'embranchement R3, une partie du fluide réfrigérant traverse la vanne V1B, la vanne d'expansion VE5, la première entrée/sortie E5_1 du cinquième échangeur thermique E5, la seconde entrée/sortie E5_2 du cinquième échangeur thermique E5, la vanne V1A, pour rejoindre le reste du fluide réfrigérant à l'embranchement R4. L'autre partie du fluide réfrigérant partant de l'embranchement R3 traverse successivement la vanne d'expansion VE2, la première entrée/sortie E2_1 du deuxième échangeur thermique E2, la seconde entrée/sortie E2_2 du deuxième échangeur thermique E2, pour rejoindre le reste du fluide réfrigérant à l'embranchement R4. En sortie de l'embranchement R4, le fluide réfrigérant traverse la seconde entrée/sortie 204 du troisième échangeur thermique E3 avant de traverser à nouveau le compresseur C.

Le mode J est un mode mixte permettant le chauffage de la cabine 210 et le dégivrage d'un pare-brise du véhicule.

Dans le mode J, le fluide réfrigérant est condensé dans le premier échangeur thermique E1, ce qui réchauffe l'air envoyé dans l'habitacle 210, puis une partie du fluide est détendue par la vanne d'expansion VE2 et évaporé dans le deuxième échangeur thermique E2, ce qui permet de déshydrater l'air cabine avant de le réchauffer dans le premier échangeur thermique E1. L'autre partie du fluide réfrigérant est détendue par la vanne d'expansion VE5 et évaporée dans le cinquième échangeur thermique E5.

Dans le mode J, le troisième échangeur thermique E3 assure par échange thermique interne le réchauffage avant compression du gaz évaporé dans les échangeurs E2 et E5 et le refroidissement du fluide condensé dans l'échangeur E1.

Dans le mode J, la vanne d'expansion VE4 est complètement fermée. La vanne de régulation V1 est complètement ouverte. La vanne d'expansion VE2 et la vanne d'expansion VE5 sont en mode régulation.

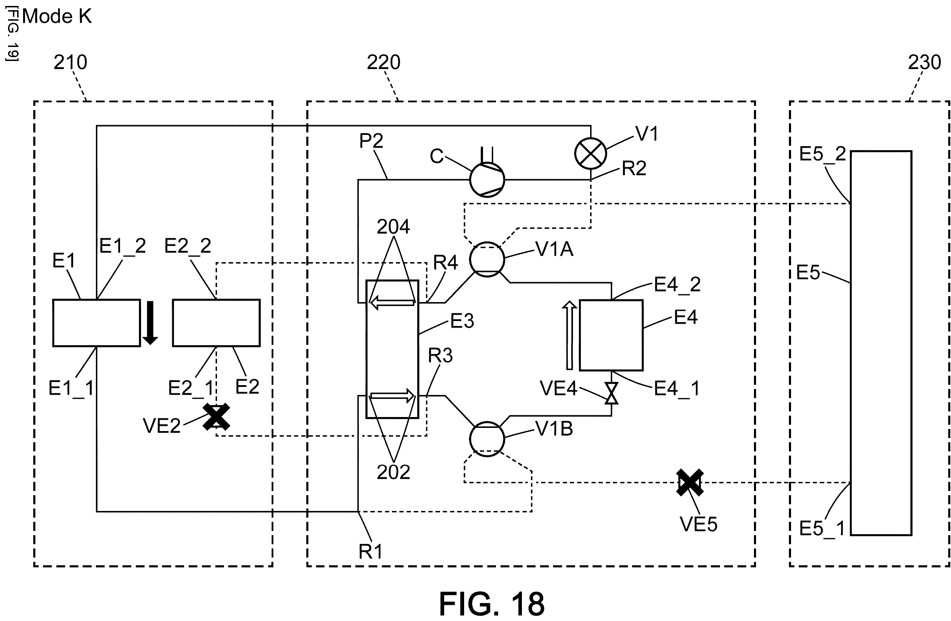

La figure 18 représente un mode K de fonctionnement du circuit réfrigérant 200 dans lequel le fluide réfrigérant issu du compresseur C traverse successivement la vanne V1, la seconde entrée/sortie E1_2 du premier échangeur thermique E1, la première entrée/sortie E1_1 du premier échangeur thermique E1, la première entrée/sortie 202 du troisième échangeur thermique E3, la vanne V1B la vanne d'expansion VE4, la première entrée/sortie E4_1 du quatrième échangeur thermique E4, la seconde entrée/sortie E4_2 du quatrième échangeur thermique E4, la vanne V1A, la seconde entrée/sortie 204 du troisième échangeur thermique E3 avant de traverser à nouveau le compresseur C.

Le mode K est un mode basique de réchauffage de l'habitacle en utilisant la chaleur du fluide caloporteur.

Dans le mode K, le fluide réfrigérant est condensé dans le premier échangeur thermique E1, ce qui réchauffe l'air envoyé dans l'habitacle 210, puis le fluide réfrigérant est détendu par la vanne d'expansion VE4 et évaporé dans le quatrième échangeur thermique E4, permettant le refroidissement du fluide caloporteur qui est dirigé vers la batterie haute tension 104 et/ou du module d'électronique de puissance 108.

Dans le mode K, le troisième échangeur thermique E3 assure par échange thermique interne le réchauffage avant compression du gaz évaporé dans l'échangeur E4 et le refroidissement du fluide condensé dans l'échangeur E1.

Dans le mode K, la vanne d'expansion VE2 et la vanne d'expansion VE5 sont complètement fermées. La vanne de régulation V1 est complètement ouverte. La vanne d'expansion VE4 est en mode régulation.

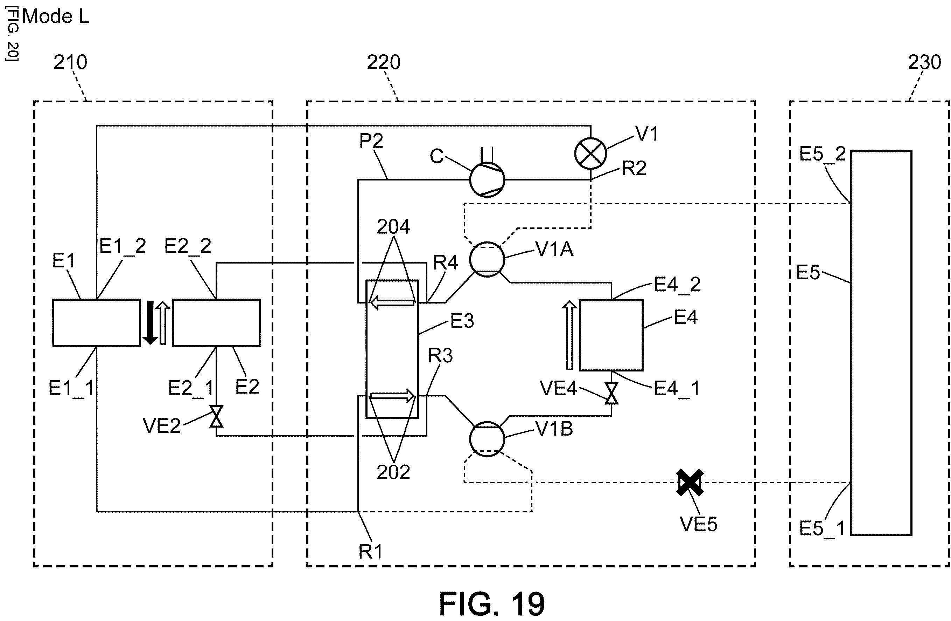

La figure 19 représente un mode L de fonctionnement du circuit réfrigérant 200 dans lequel le fluide réfrigérant issu du compresseur C traverse successivement la vanne V1, la seconde entrée/sortie E1_2 du premier échangeur thermique E1, la première entrée/sortie E1_1 du premier échangeur thermique E1, la première entrée/sortie 202 du troisième échangeur thermique E3. Ensuite, au niveau de l'embranchement R3, une partie du fluide réfrigérant traverse successivement la vanne V1B, la vanne d'expansion VE4, la première entrée/sortie E4_1 du quatrième échangeur thermique E4, la seconde entrée/sortie E4_2 du quatrième échangeur thermique E4, la vanne V1A, pour rejoindre le reste du fluide réfrigérant au niveau de l'embranchement R4. L'autre partie du fluide réfrigérant, en partant de l'embranchement R3, traverse successivement la vanne d'expansion VE2, la première entrée/sortie E2_1 du deuxième échangeur thermique E2, la seconde entrée/sortie E2_2 du deuxième échangeur thermique E2, pour rejoindre le reste du fluide réfrigérant au niveau de l'embranchement R4. Le fluide réfrigérant en sortie de l'embranchement R4 traverse la seconde entrée/sortie 204 du troisième échangeur thermique E3 avant de traverser à nouveau le compresseur C.

Le mode L est un mode mixte permettant le chauffage de la cabine 210 et le dégivrage du pare-brise, ainsi que le refroidissement du fluide caloporteur qui pourrait servir à refroidir la batterie haute tension 104 et/ou du module d'électronique de puissance 108.

Dans le mode L, le fluide réfrigérant est condensé dans le premier échangeur thermique E1, ce qui réchauffe l'air envoyé dans l'habitacle 210, puis une partie du fluide est détendue par la vanne d'expansion VE2 et évaporé dans le deuxième échangeur thermique E2, ce qui permet de déshydrater l'air dans la cabine avant de le réchauffer dans le premier échangeur thermique E1. L'autre partie du fluide réfrigérant est détendue par la vanne d'expansion VE4 et évaporée dans le quatrième échangeur thermique E4, permettant le refroidissement du fluide caloporteur qui est dirigé vers la batterie haute tension 104 et/ou le module d'électronique de puissance 108.

Dans le mode L, le troisième échangeur thermique E3 assure par échange thermique interne le réchauffage avant compression du gaz évaporé dans les échangeurs E2 et E4 et le refroidissement du fluide condensé dans l'échangeur E1.

Dans le mode L, la vanne d'expansion VE5 est complètement fermée. La vanne de régulation V1 est complètement ouverte. La vanne d'expansion VE2 et la vanne d'expansion VE4 sont en mode régulation.

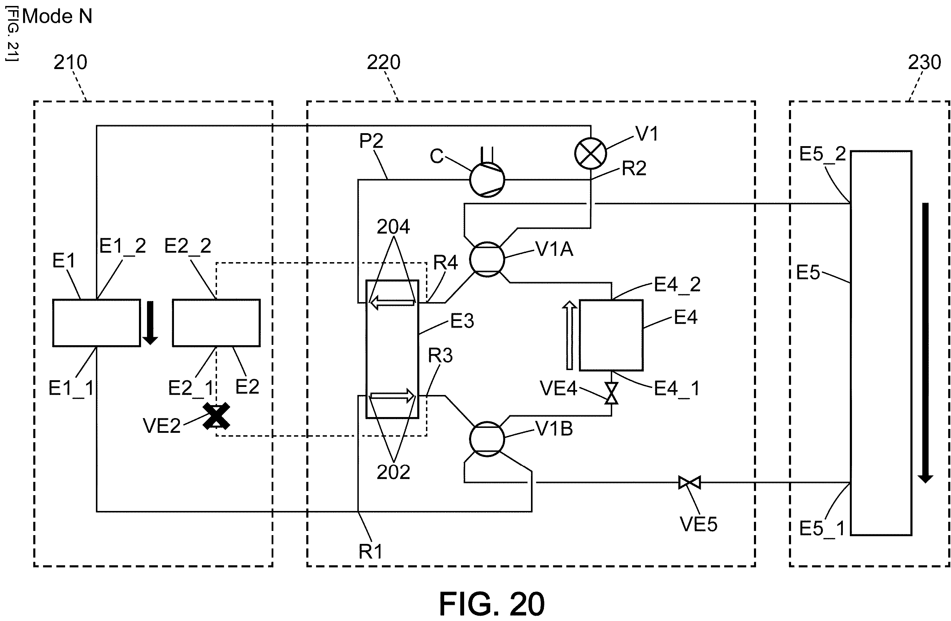

La figure 20 représente un mode N de fonctionnement du circuit réfrigérant 200 dans lequel le fluide réfrigérant issu du compresseur C est divisé en deux parties au niveau de l'embranchement R2. Une partie du fluide réfrigérant traverse la vanne V1A, la seconde entrée/sortie E5_2 du cinquième échangeur thermique E5, la première entrée/sortie E5_1 du cinquième échangeur thermique E5, la vanne d'expansion VE5, la vanne V1B pour rejoindre le reste du fluide réfrigérant au niveau de l'embranchement R1. L'autre partie du fluide réfrigérant, en sortie de l'embranchement R2, traverse successivement la vanne V1, la seconde entrée/sortie E1_2 du premier échangeur thermique E1, la première entrée/sortie E1_1 du premier échangeur thermique E1, pour rejoindre le reste du fluide réfrigérant. Le fluide réfrigérant en sortie de l'embranchement R1 traverse successivement la première entrée/sortie 202 du troisième échangeur thermique E3, la vanne V1B, la vanne d'expansion VE4, la première entrée/sortie E4_1 du quatrième échangeur thermique E4, la seconde entrée/sortie E4_2 du quatrième échangeur thermique E4, la vanne V1A, la seconde entrée/sortie 204 du troisième échangeur thermique E3 avant de traverser à nouveau le compresseur C.

Le mode N est un mode basique de réchauffage de l'habitacle 210 et de refroidissement à forte puissance de la batterie haute tension 104 et/ou du module d'électronique de puissance 108.

Dans le mode N, le réfrigérant est condensé dans le premier échangeur thermique E1, ce qui réchauffe l'air envoyé dans l'habitacle, ainsi que dans le cinquième échangeur thermique E5, pour une meilleure condensation, puis le fluide est détendu par VE4 et évaporé dans E4, permettant le refroidissement du fluide caloporteur qui est dirigé vers la batterie et/ou l'électronique de puissance.

Dans le mode N, le troisième échangeur thermique E3 assure par échange thermique interne le réchauffage avant compression du gaz évaporé dans l'échangeur E4 et le refroidissement du fluide condensé dans les échangeurs E1 et E5.

Dans le mode N, la vanne d'expansion VE2 est complètement fermée. La vanne de régulation V1 et la vanne d'expansion VE5 sont complètement ouvertes. La vanne d'expansion VE4 est en mode régulation.

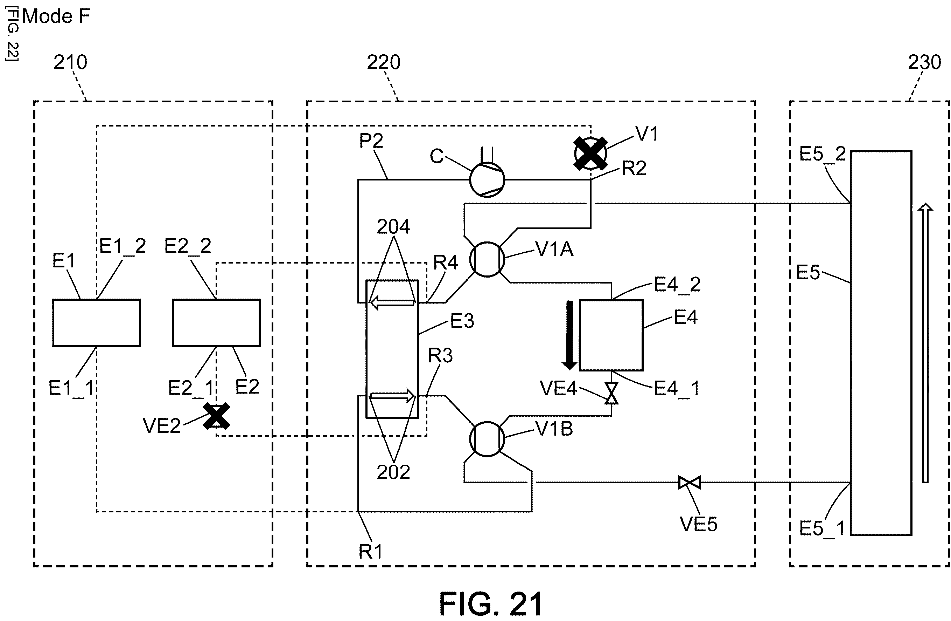

La figure 21 représente un mode F de fonctionnement du circuit réfrigérant 200 dans lequel le fluide réfrigérant issu du compresseur C traverse successivement la vanne V1A, la seconde entrée/sortie E4_2 du quatrième échangeur thermique E4, la première entrée/sortie E4_1 du quatrième échangeur thermique E4, la vanne d'expansion VE4, la vanne V1B, la première entrée/sortie 202 du troisième échangeur thermique E3, la vanne V1B, la vanne d'expansion VE5, la première entrée/sortie E5_1 du cinquième échangeur thermique E5, la seconde entrée/sortie E5_2 du cinquième échangeur thermique E5, la vanne V1A, la seconde entrée/sortie 204 du troisième échangeur thermique E3 avant de traverser à nouveau le compresseur C.

Le mode F est un mode permettant le réchauffage de la batterie haute tension 104 et/ou du module d'électronique de puissance 108 à partir de l'air ambiant.

Dans le mode F, le fluide réfrigérant est condensé dans le quatrième échangeur thermique E4, ce qui réchauffe le fluide caloporteur qui est dirigé vers la batterie haute tension 104 et/ou le module d'électronique de puissance 108, puis le fluide réfrigérant est détendu par la vanne d'expansion VE5 et évaporé dans le cinquième échangeur thermique E5.

Dans le mode F, le troisième échangeur thermique E3 assure par échange thermique interne le réchauffage avant compression du gaz évaporé dans l'échangeur E5 et le refroidissement du fluide condensé dans l'échangeur E4.

Dans le mode F, la vanne de régulation V1 et la vanne d'expansion VE2 sont complètement fermées. La vanne d'expansion VE4 est complètement ouverte. La vanne d'expansion VE5 est en mode régulation.

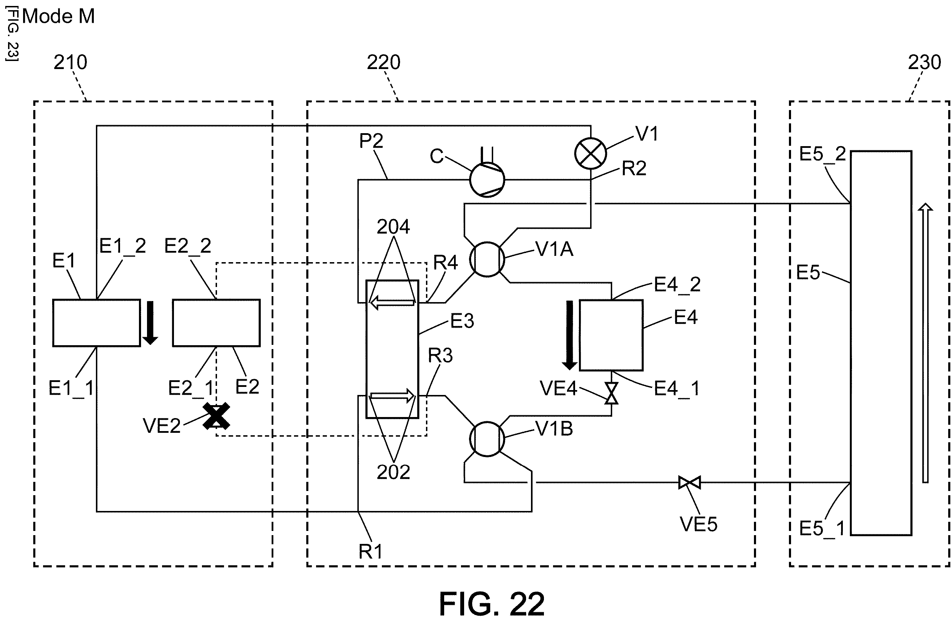

La figure 22 représente un mode M de fonctionnement du circuit réfrigérant 200 dans lequel le fluide réfrigérant issu du compresseur C est divisé en deux parties au niveau de l'embranchement R2. Une partie du fluide réfrigérant traverse la vanne V1A, la seconde entrée/sortie E4_2 du quatrième échangeur thermique E4, la première entrée/sortie E4_1 du quatrième échangeur thermique E4, la vanne d'expansion VE4, la vanne V1B pour rejoindre le reste du fluide réfrigérant au niveau de l'embranchement R1. L'autre partie fluide réfrigérant, en sortie de l'embranchement R2, traverse successivement la vanne V1, la seconde entrée/sortie E1_2 du premier échangeur thermique E1, la première entrée/sortie E1_1 du premier échangeur thermique E1, pour rejoindre le reste du fluide réfrigérant. Le fluide réfrigérant en sortie de l'embranchement R1 traverse successivement la première entrée/sortie 202 du troisième échangeur thermique E3, la vanne V1B, la vanne d'expansion VE5, la première entrée/sortie E5_1 du cinquième échangeur thermique E5, la seconde entrée/sortie E4_2 du cinquième échangeur thermique E4, la vanne V1A, la seconde entrée/sortie 204 du troisième échangeur thermique E3 avant de traverser à nouveau le compresseur C.

Le mode M est un mode mixte permettant le chauffage de la cabine 210 et le réchauffage de la batterie haute tension 104 et/ou du module d'électronique de puissance 108 à partir de l'air ambiant.

Dans le mode M, le fluide réfrigérant est condensé dans le premier échangeur thermique E1, ce qui réchauffe l'air envoyé dans l'habitacle 210, et dans le quatrième échangeur thermique E4, ce qui réchauffe le fluide caloporteur qui est dirigé vers la batterie haute tension 104 et/ou le module d'électronique de puissance 108, puis le fluide est détendu par la vanne d'expansion VE5 et évaporé dans le cinquième échangeur thermique E5.

Dans le mode M, le troisième échangeur thermique E3 assure par échange thermique interne le réchauffage avant compression du gaz évaporé dans l'échangeur E5 et le refroidissement du fluide condensé dans les échangeurs E1 et E4.

Dans le mode M, la vanne d'expansion VE2 est complètement fermée. La vanne de régulation V1 et la vanne d'expansion VE4 sont complètement ouvertes. La vanne d'expansion VE5 est en mode régulation.

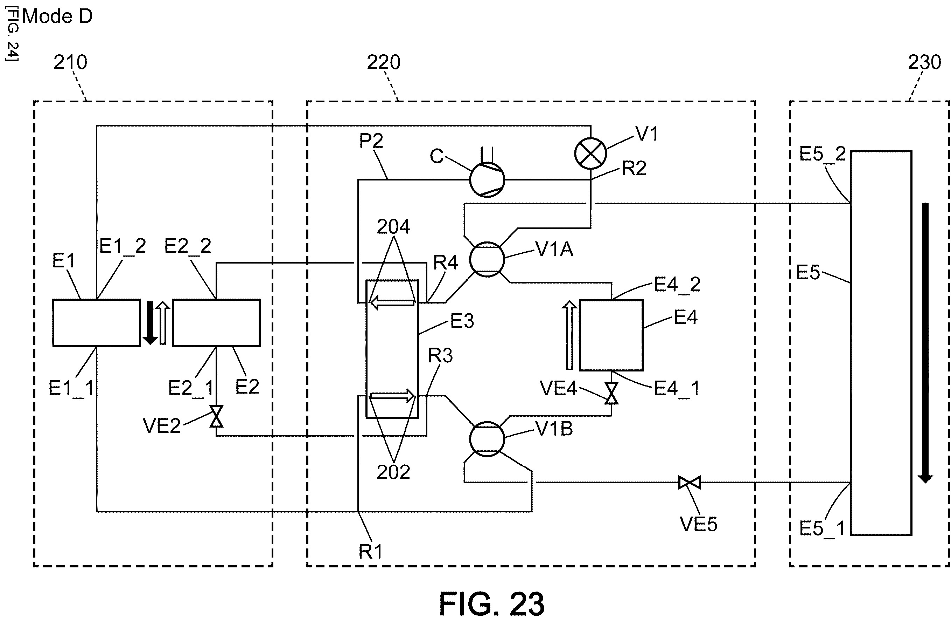

La figure 23 concerne un mode D de fonctionnement du circuit réfrigérant 200 dans lequel le fluide réfrigérant issu du compresseur C est divisé en deux parties au niveau de l'embranchement R2. Une partie du fluide réfrigérant traverse la vanne V1A, la seconde entrée/sortie E5_2 du cinquième échangeur thermique E5, la première entrée/sortie E5_1 du cinquième échangeur thermique E5, la vanne d'expansion VE5, la vanne V1B pour rejoindre le reste du fluide réfrigérant au niveau de l'embranchement R1. L'autre partie fluide réfrigérant, en sortie de l'embranchement R2, traverse successivement la vanne V1, la seconde entrée/sortie E1_2 du premier échangeur thermique E1, la première entrée/sortie E1_1 du premier échangeur thermique E1, pour rejoindre le reste du fluide réfrigérant au niveau de l'embranchement R1. Le fluide réfrigérant en sortie de l'embranchement R1, le fluide réfrigérant traverse la première entrée/sortie 202 du troisième échangeur thermique E3, ensuite, au niveau de l'embranchement R3, une partie du fluide réfrigérant traverse successivement la vanne V1B, la vanne d'expansion VE4, la première entrée/sortie E4_1 du quatrième échangeur thermique E4, la seconde entrée/sortie E4_2 du quatrième échangeur thermique E4, la vanne V1A, pour rejoindre le reste du fluide réfrigérant au niveau de l'embranchement R4. L'autre partie du fluide réfrigérant, en partant de l'embranchement R3, traverse successivement la vanne d'expansion VE2, la première entrée/sortie E2_1 du deuxième échangeur thermique E2, la seconde entrée/sortie E2_2 du deuxième échangeur thermique E2, pour rejoindre le reste du fluide réfrigérant au niveau de l'embranchement R4. Le fluide réfrigérant en sortie de l'embranchement R4, traverse la seconde entrée/sortie 204 du troisième échangeur thermique E3 avant de traverser à nouveau le compresseur C.

Le mode D est un mode mixte permettant le chauffage cabine 210 et le dégivrage du pare-brise, ainsi que le refroidissement à forte puissance de la batterie haute tension 104 et/ou du module d'électronique de puissance 108.

Dans le mode D, le fluide réfrigérant est condensé dans le premier échangeur thermique E1, ce qui réchauffe l'air envoyé dans l'habitacle 210, et dans le cinquième échangeur thermique E5, puis une partie du fluide est détendue par la vanne d'expansion VE2 et évaporée dans le deuxième échangeur thermique E2, ce qui permet de déshydrater l'air de la cabine 210 avant de le réchauffer dans le premier échangeur thermique E1. L'autre partie du fluide est détendue dans la vanne d'expansion VE4 puis évaporée dans le quatrième échangeur thermique E4, ce qui refroidit le fluide caloporteur qui est dirigé vers la batterie haute tension 104 et/ou le module d'électronique de puissance 108.

Le troisième échangeur thermique E3 assure par échange thermique interne le réchauffage avant compression du gaz évaporé dans les échangeurs E2 et E4 et le refroidissement du fluide condensé dans les échangeurs E1 et E5.

Dans le mode D, la vanne d'expansion VE5 et la vanne de régulation V1 sont complètement ouvertes. La vanne d'expansion VE2 et la vanne d'expansion VE4 sont en mode régulation.

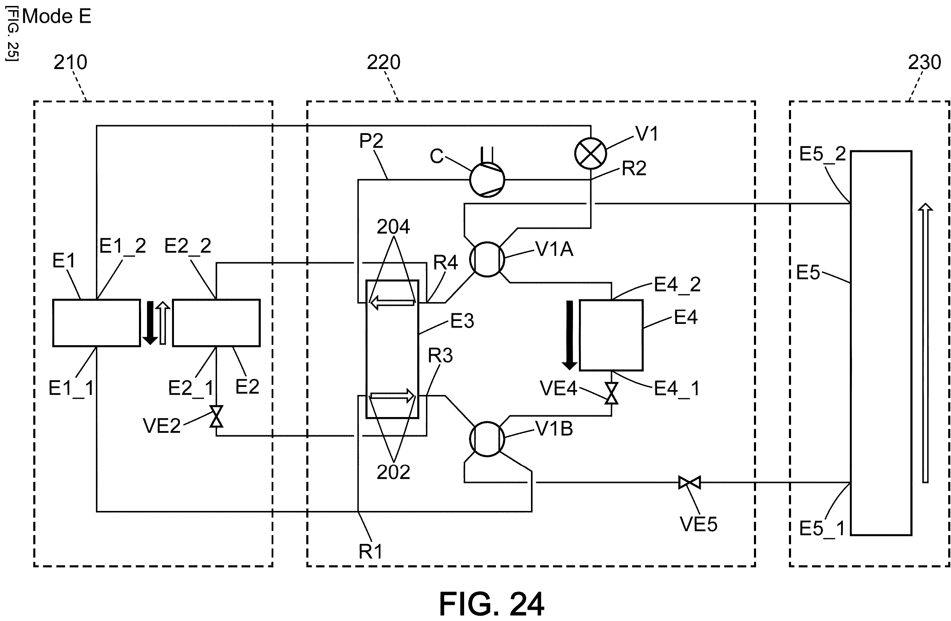

La figure 24 est un mode E de fonctionnement du circuit réfrigérant 200 dans lequel le fluide réfrigérant issu du compresseur C est divisé en deux parties au niveau de l'embranchement R2. Une partie du fluide réfrigérant traverse la vanne V1A, la seconde entrée/sortie E4_2 du quatrième échangeur thermique E4, la première entrée/sortie E4_1 du quatrième échangeur thermique E4, la vanne d'expansion VE4, la vanne V1B pour rejoindre le reste du fluide réfrigérant au niveau de l'embranchement R1. L'autre partie du fluide réfrigérant, en sortie de l'embranchement R2, traverse successivement la vanne V1, la seconde entrée/sortie E1_2 du premier échangeur thermique E1, la première entrée/sortie E1_1 du premier échangeur thermique E1, pour rejoindre le reste du fluide réfrigérant à l'embranchement R1. Le fluide réfrigérant en sortie de l'embranchement R1 traverse la première entrée/sortie 202 du troisième échangeur thermique E3 puis est séparé en deux au niveau de l'embranchement R3. Une partie du fluide réfrigérant traverse successivement la vanne V1B, la vanne d'expansion VE5, la première entrée/sortie E5_1 du cinquième échangeur thermique E5, la seconde entrée/sortie E5_2 du cinquième échangeur thermique E5, la vanne V1A pour rejoindre l'autre partie du fluide à l'embranchement R4. L'autre partie du fluide réfrigérant, en partant de l'embranchement R3, traverse successivement la vanne d'expansion VE2, la première entrée/sortie E2_1 du deuxième échangeur thermique E2, la seconde entrée/sortie E2_1 du deuxième échangeur thermique E2 pour rejoindre le reste du fluide réfrigérant à l'embranchement R4 qui traverse ensuite la seconde entrée/sortie 204 du troisième échangeur thermique E3 avant de traverser à nouveau le compresseur C.

Le mode E est un mixte permettant le chauffage de la cabine 210 et le dégivrage du pare-brise, ainsi que le chauffage à forte puissance de la batterie haute tension 104 et/ou du module d'électronique de puissance 108.

Dans le mode E, le fluide réfrigérant est condensé dans le premier échangeur thermique E1, ce qui réchauffe l'air envoyé dans l'habitacle 210, et dans le quatrième échangeur thermique E4, ce qui réchauffe le fluide caloporteur qui est dirigé vers la batterie haute tension 104 et/ou le module d'électronique de puissance 108, puis une partie du fluide réfrigérant est détendue par la vanne d'expansion VE2 et évaporée dans le deuxième échangeur thermique E2, ce qui permet de déshydrater l'air cabine avant de le réchauffer dans le premier échangeur thermique E1. L'autre partie du fluide réfrigérant est détendue dans la vanne d'expansion VE5 puis évaporée dans le cinquième échangeur thermique E5.

Dans le mode E, le troisième échangeur thermique E3 assure par échange thermique interne le réchauffage avant compression du gaz évaporé dans les échangeurs E2 et E5 et le refroidissement du fluide condensé dans les échangeurs E1 et E4.

Dans le mode E, la vanne d'expansion VE4 et la vanne de régulation V1 sont complètement ouvertes. La vanne d'expansion VE2 et la vanne d'expansion VE5 sont en mode régulation.

La combinaison des quatorze modes du circuit réfrigérant 200 (A à N) avec les trois modes du circuit caloporteur (1 à 3) donne la possibilité d'obtenir 42 modes différents.

A titre d'exemples et de manière non limitative, quelques exemples de modes de fonctionnement d'une installation de conditionnement thermique comprenant le circuit caloporteur 100 et le circuit réfrigérant 200 et leur application sont décrits dans la suite. Chaque mode est identifié par une référence constituée de la lettre correspondant au mode du circuit réfrigérant 200 accolée au chiffre correspondant au mode du circuit caloporteur 100.

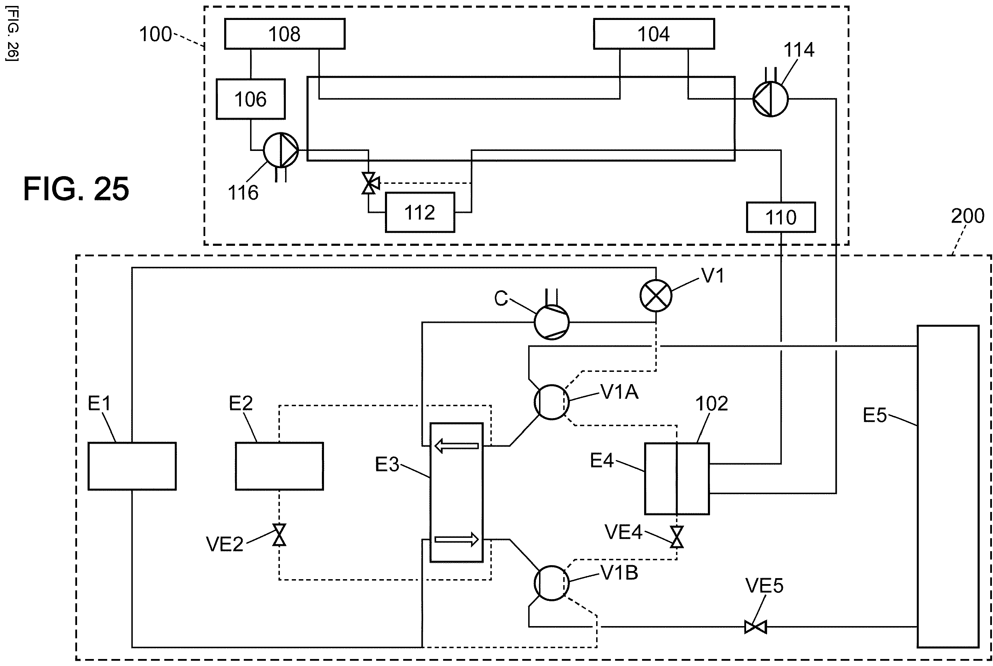

La figure 25 représente un mode I2 de fonctionnement de l'installation dans lequel le circuit réfrigérant 200 fonctionne selon le mode I de la figure 16 et le circuit caloporteur 100 fonctionne selon le deuxième mode de fonctionnement de la figure 3. Ce mode I2 peut être utilisé dans le cas du roulage rapide par temps froid du véhicule. Ainsi, le circuit réfrigérant 200 est utilisé en pompe à chaleur à partir de l'air ambiant pour réchauffer la cabine 210, pendant que le circuit caloporteur 100 récupère la chaleur du système de propulsion à travers l'échangeur du moteur de traction 106 pour réchauffer la batterie haute tension 104.

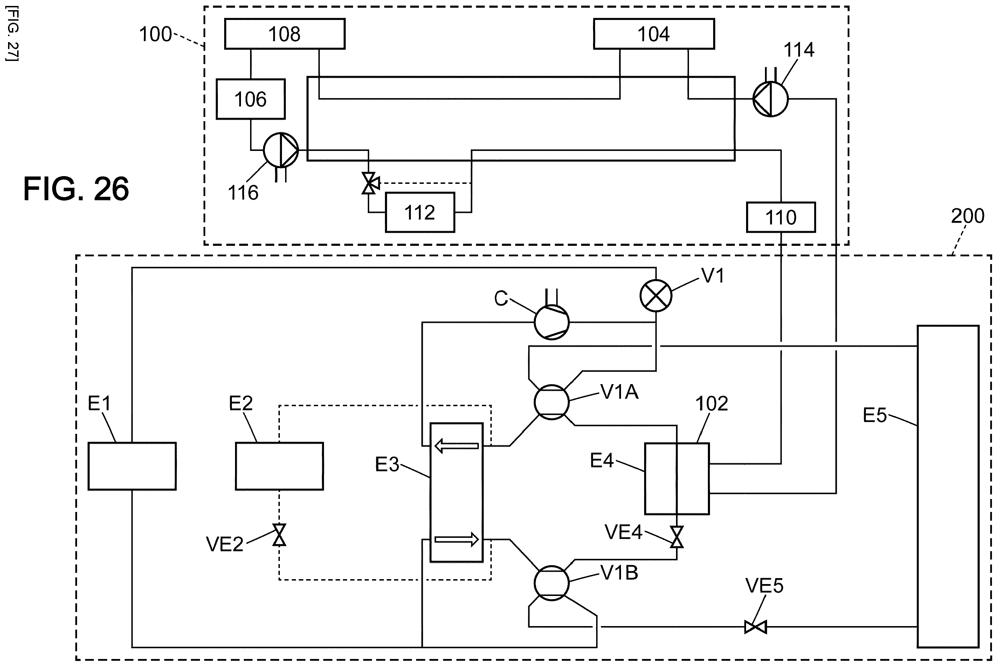

La figure 26 représente un mode N2 de fonctionnement de l'installation dans lequel le circuit réfrigérant 200 fonctionne selon le mode N de la figure 20 et le circuit caloporteur 100 fonctionne selon le deuxième mode de fonctionnement de la figure 3. Ce mode N2 peut être utilisé pour une recharge rapide de la batterie haute tension 104 par temps froid. Ainsi, le circuit réfrigérant 200 est utilisé en pompe à chaleur pour réchauffer la cabine 210, pendant que le circuit caloporteur 100 récupère le froid généré par l'évaporation du fluide réfrigérant pour refroidir la batterie haute tension 104.

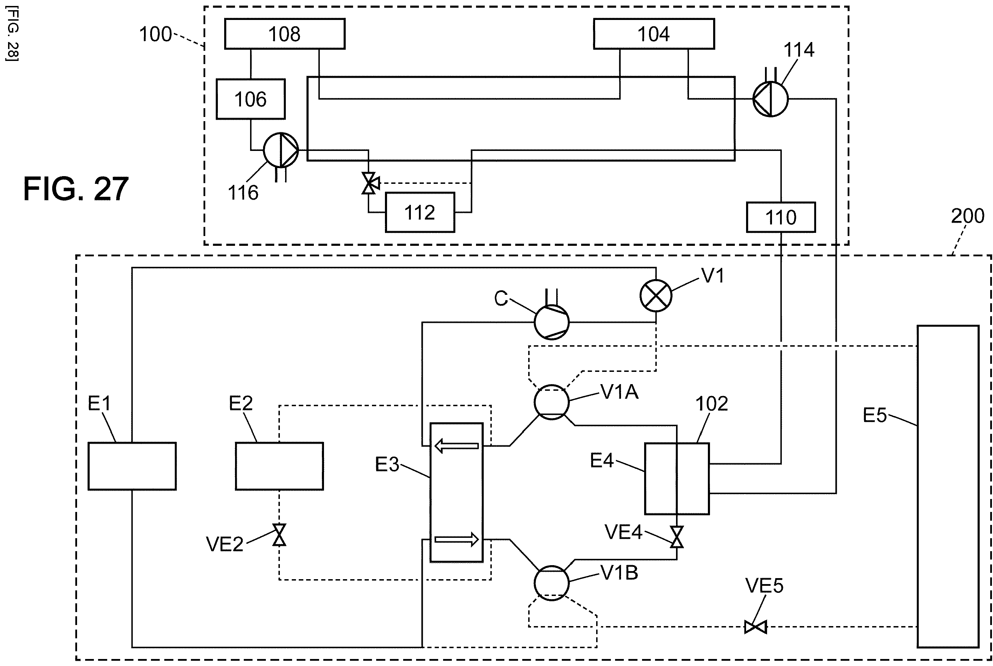

La figure 27 représente un mode K2 de fonctionnement de l'installation dans lequel le circuit réfrigérant 200 fonctionne selon le mode K de la figure 18 et le circuit caloporteur 100 fonctionne selon le deuxième mode de fonctionnement de la figure 3. Ce mode K2 peut être utilisé pour un roulage rapide par temps froid, après une recharge de la batterie haute tension 104. Ainsi, le circuit réfrigérant 200 est utilisé en pompe à chaleur avec comme source chaude la batterie haute tension 104 pour réchauffer la cabine 210.

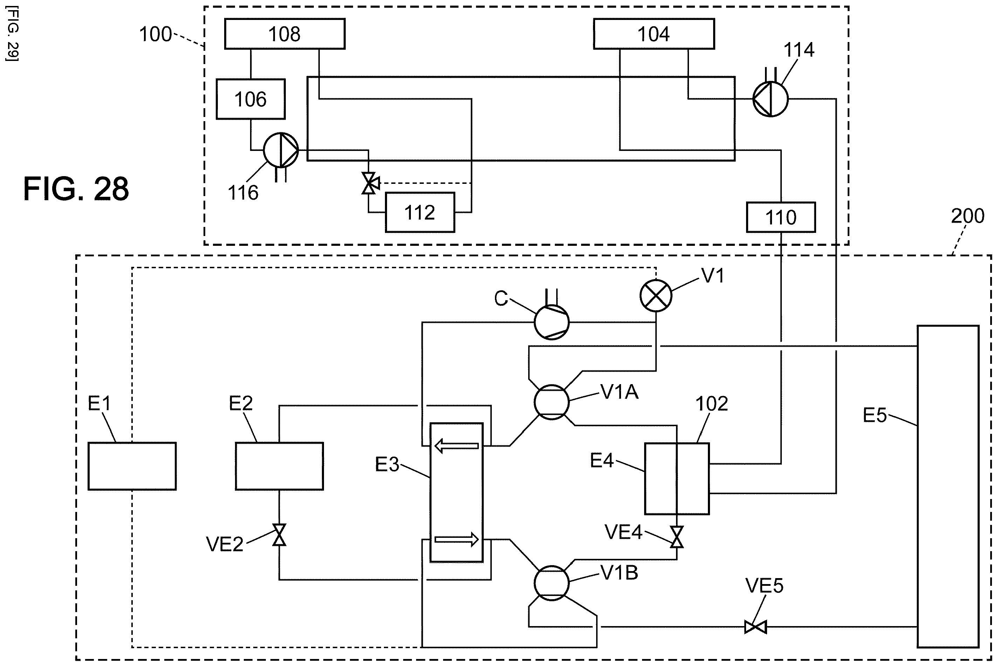

La figure 28 représente un mode C1 de fonctionnement de l'installation dans lequel le circuit réfrigérant 200 fonctionne selon le mode C de la figure 14 et le circuit caloporteur 100 fonctionne selon le premier mode de fonctionnement de la figure 2. Ce mode C1 peut être utilisé pour un roulage rapide par temps chaud. Ainsi, le circuit réfrigérant 200 est utilisé en mode climatisation à partir de l'air ambiant pour refroidir la cabine 210 et la batterie haute tension 104. Le circuit caloporteur 100 est utilisé pour refroidir passivement le système de propulsion en refroidissant l'échangeur thermique du moteur de traction 106 à partir de l'air ambiant.

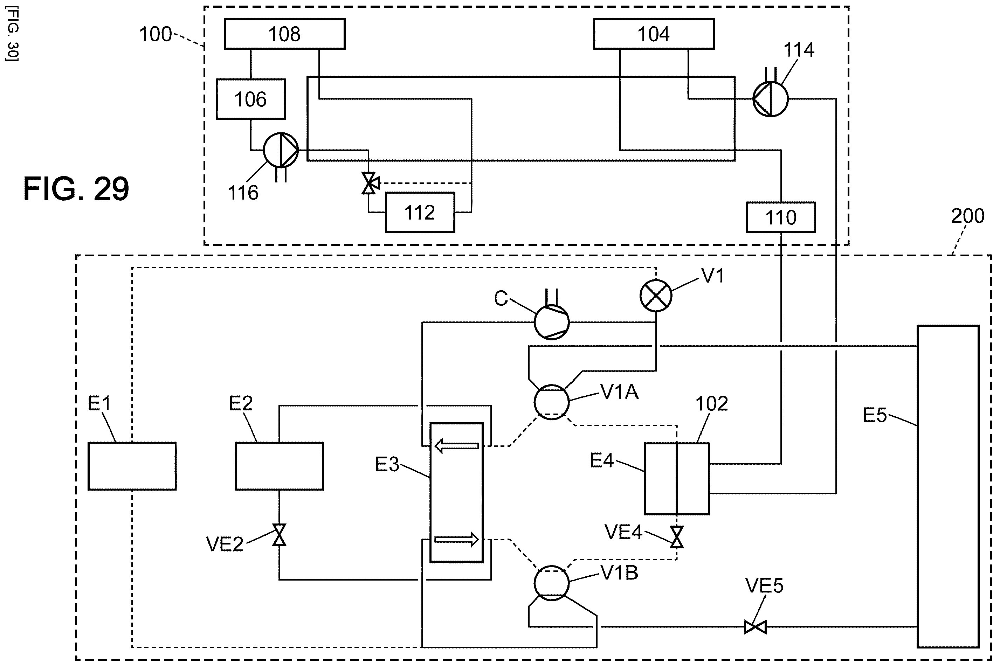

La figure 29 représente un mode A1 de fonctionnement de l'installation dans lequel le circuit réfrigérant 200 fonctionne selon le mode A de la figure 11 et le circuit caloporteur 100 fonctionne selon le premier mode de fonctionnement de la figure 2. Ce mode A1 peut être utilisé pour un début de charge rapide de la batterie haute tension 104 par temps chaud. Ainsi, le circuit réfrigérant 200 est utilisé en mode climatisation à partir de l'air ambiant pour refroidir la cabine 210. La batterie haute tension 104 préalablement refroidie est laissée s'auto-échauffer. Le circuit caloporteur 100 peut être utilisé pour refroidir passivement le système de propulsion en refroidissant l'échangeur thermique du moteur de traction 106 à partir de l'air ambiant si nécessaire.

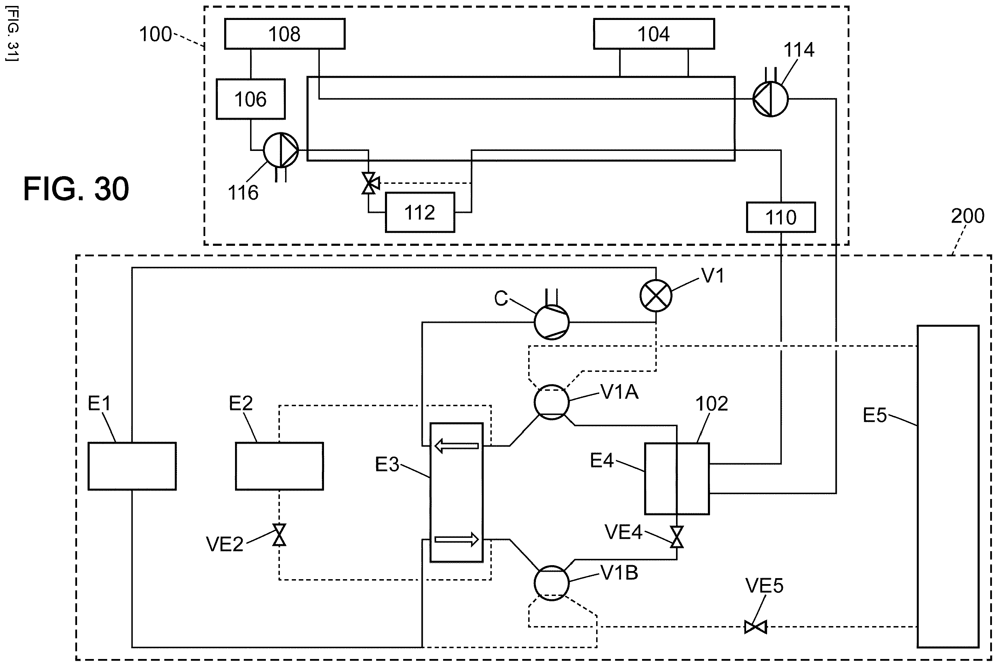

La figure 30 représente un mode K3 de fonctionnement de l'installation dans lequel le circuit réfrigérant 200 fonctionne selon le mode K de la figure 18 et le circuit caloporteur 100 fonctionne selon le troisième mode de fonctionnement de la figure 4. Ce mode K3 peut être adapté pour un roulage urbain par temps froid. Le circuit réfrigérant 200 est utilisé pour réchauffer la cabine 210 en mode pompe à chaleur à partir de la chaleur générée par le système de propulsion et récupérée par le circuit caloporteur 100 à travers l'échangeur thermique du moteur de traction 106. La batterie haute tension 104 préalablement conditionnée n'est pas régulée pendant cette phase.

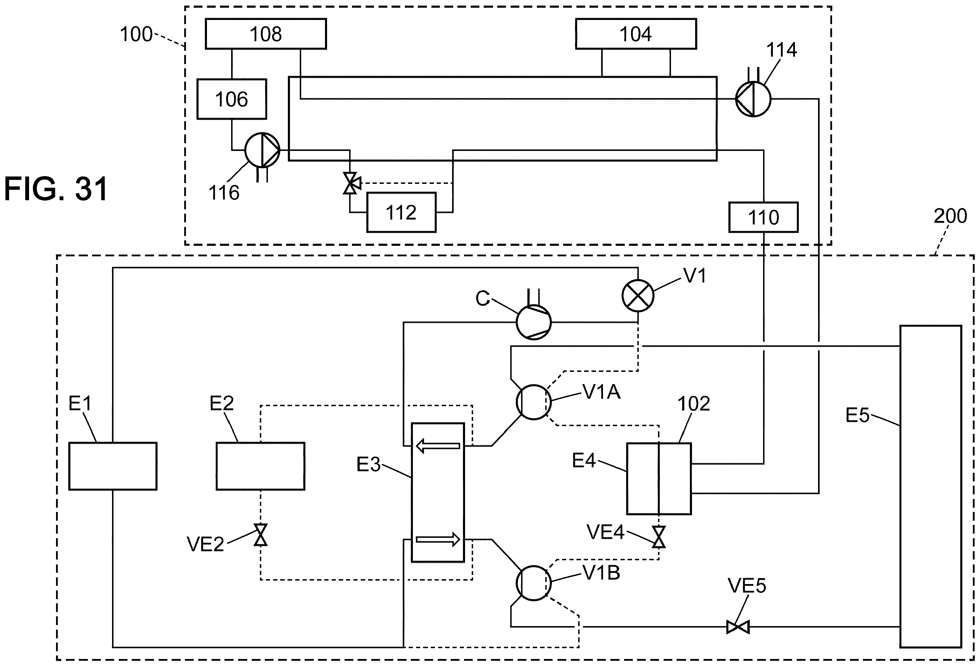

La figure 31 représente un mode I3 de fonctionnement de l'installation dans lequel le circuit réfrigérant 200 fonctionne selon le mode I de la figure 16 et le circuit caloporteur 100 fonctionne selon le troisième mode de fonctionnement de la figure 4. Ce mode I3 peut être adapté pour un roulage urbain par temps froid. Le circuit réfrigérant 200 est utilisé pour réchauffer la cabine 210 en mode pompe à chaleur à partir de l'air ambiant quand la température du système de propulsion est descendue au niveau de l'ambiante. La batterie haute tension 104 préalablement conditionnée n'est pas régulée pendant cette phase.

Les schémas précédents ne sont que des exemples de sept utilisations possibles parmi les quarante-deux modes techniquement réalisables. D'autres cas d'usage du véhicule mettent avantageusement en œuvre d'autres modes, de la même manière que les modes décrits peuvent être utilisés dans d'autres cas d'usage.

## Revendications

1. Installation de conditionnement thermique d'un habitacle et/ou d'au moins un organe d'un véhicule comprenant :
- un circuit caloporteur (100) de circulation d'un fluide caloporteur,
- un circuit réfrigérant (200) de circulation d'un fluide réfrigérant,
**caractérisée en ce que** le circuit caloporteur (100) comprend ledit au moins un organe du véhicule (104, 106, 108) pour y échanger de la chaleur, un moyen de chauffage (110) du fluide caloporteur, un échangeur thermique inter-circuits (102), un échangeur thermique frontal (112) apte à échanger de la chaleur avec de l'air extérieur au véhicule, et des moyens de circulation du fluide caloporteur aptes à faire circuler le fluide caloporteur entre un ou plusieurs organes du véhicule (104,106,108),
le moyen de chauffage (110) du fluide caloporteur, l'échangeur thermique frontal (112) et/ou l'échangeur thermique inter-circuits (102),
**en ce que** le circuit réfrigérant (200) comprend un compresseur (C), un premier échangeur thermique (E1) et un deuxième échangeur thermique (E2) aptes à échanger de la chaleur avec de l'air circulant dans la cabine du véhicule, un quatrième échangeur thermique (E4), un cinquième échangeur thermique (E5) apte à échanger de la chaleur avec de l'air extérieur au véhicule, et des moyens de circulation du fluide réfrigérant aptes à faire circuler le fluide caloporteur entre les échangeurs thermiques du circuit réfrigérant, et
**en ce que** l'échangeur thermique inter-circuits (102) du circuit caloporteur et le quatrième échangeur thermique (E4) du circuit réfrigérant sont arrangés en échange thermique entre eux.

2. Installation selon la revendication 1, dans laquelle ledit au moins un organe du véhicule (104,106,108) est une batterie haute tension (104), un module d'électronique de puissance (108) ou un échangeur d'un moteur de traction (106).

3. Installation selon la revendication 2, dans laquelle le circuit caloporteur comprend quatre boucles dans lesquelles circule le fluide caloporteur et reliées par une vanne multivoies (118),
la première boucle comprenant le module d'électronique de puissance (108) et l'échangeur du moteur de traction (106),
la deuxième boucle comprenant la batterie haute tension (104),
la troisième boucle comprenant le moyen de chauffage (110) du fluide caloporteur et l'échangeur thermique inter-circuits (102),
la quatrième boucle comprenant l'échangeur thermique frontal (112).

4. Installation selon la revendication 2, dans laquelle le circuit caloporteur comprend trois boucles dans lesquelles circule le fluide caloporteur et reliées par une vanne multivoies (120),
la première boucle comprenant le module d'électronique de puissance (108), l'échangeur du moteur de traction (106) et l'échangeur thermique frontal (112),
la deuxième boucle comprenant la batterie haute tension (104),
la troisième boucle comprenant le moyen de chauffage (110) du fluide caloporteur et l'échangeur thermique inter-circuits (102).

5. Installation selon la revendication 3 ou 4, dans laquelle la première boucle du circuit caloporteur et/ou la troisième boucle du circuit caloporteur comprend une pompe de circulation (114,116).

6. Installation selon l'une des revendications précédentes, dans laquelle le moyen de chauffage (110) du circuit caloporteur (100) est une résistance électrique simple ou une résistance électrique à coefficient de température positif.

7. Installation selon l'une des revendications précédentes prise en combinaison avec la revendication 3, dans laquelle les moyens de circulation du circuit caloporteur sont configurés pour fonctionner selon l'un au moins des modes suivants :
un premier mode (fig. 2) dans lequel d'une part la première boucle et la quatrième boucle communiquent de sorte que du fluide caloporteur circule dans la première boucle et la quatrième boucle, et d'autre part la deuxième boucle et la troisième boucle communiquent de sorte que du fluide caloporteur circule dans la deuxième boucle et la troisième boucle,
un deuxième mode (fig. 3) dans lequel les quatre boucles communiquent entre elles de sorte que le fluide caloporteur circule dans les quatre boucles, et
un troisième mode (fig. 4) dans lequel la première boucle, la troisième boucle et la quatrième boucle communiquent de sorte que le fluide caloporteur circule dans la première boucle, dans la troisième boucle et dans la quatrième boucle.

8. Installation selon l'une des revendications précédentes prise en combinaison avec la revendication 4, dans laquelle les moyens de circulation du circuit caloporteur sont configurés pour fonctionner selon l'un au moins des modes suivants :
un premier mode (fig. 5) dans lequel d'une part du fluide caloporteur circule dans la première boucle,
et d'autre part la deuxième boucle et la troisième boucle communiquent de sorte que du fluide caloporteur circule dans la deuxième boucle et la troisième boucle,
un deuxième mode (fig. 6) dans lequel les trois boucles communiquent entre elles de sorte que le fluide caloporteur circule dans les trois boucles, et
un troisième mode (fig. 7) dans lequel la première boucle et la troisième boucle communiquent de sorte que le fluide caloporteur circule dans la première boucle et la troisième boucle.

9. Installation selon l'une des revendications précédentes, les moyens de circulation du circuit réfrigérant étant configurés pour fonctionner selon l'un au moins des modes suivants :
un mode A (fig. 11) dans lequel le fluide réfrigérant circule selon une boucle comportant au moins successivement le compresseur (C), le cinquième échangeur thermique (E5) et le deuxième échangeur thermique (E2) avant de traverser à nouveau le compresseur (C),
un mode B (fig. 13) dans lequel le fluide réfrigérant circule selon une boucle comportant au moins successivement le compresseur (C), le cinquième échangeur thermique (E5), et le quatrième échangeur thermique (E4) avant de traverser à nouveau le compresseur (C),
un mode C (fig. 14) dans lequel le fluide réfrigérant circule selon une boucle comportant au moins successivement le compresseur (C), le cinquième échangeur thermique (E5), simultanément le quatrième échangeur thermique (E4) et le deuxième échangeur thermique (E2) avant de traverser à nouveau le compresseur (C),
un mode D (fig. 23) dans lequel le fluide réfrigérant circule selon une boucle comportant au moins successivement le compresseur (C), simultanément le premier échangeur thermique (E1) et le cinquième échangeur thermique (E5), ensuite simultanément le quatrième échangeur thermique (E4) et le deuxième échangeur thermique (E2), avant de traverser à nouveau le compresseur (C),
un mode E (fig. 24) dans lequel le fluide réfrigérant circule selon une boucle comportant au moins successivement le compresseur (C), simultanément le premier échangeur thermique (E1) et le quatrième échangeur thermique (E4), ensuite simultanément le cinquième échangeur thermique (E5) et le deuxième échangeur thermique (E2) avant de traverser à nouveau le compresseur (C),
un mode F (fig. 21) dans lequel le fluide réfrigérant circule selon une boucle comportant au moins successivement le compresseur (C), le quatrième échangeur thermique (E4), et le cinquième échangeur thermique (E5) avant de traverser à nouveau le compresseur (C),
un mode G (fig. 12) dans lequel le fluide réfrigérant circule selon une boucle comportant au moins successivement le compresseur (C), le quatrième échangeur thermique (E4), et le deuxième échangeur thermique (E2) avant de traverser à nouveau le compresseur (C),
un mode H (fig. 15) dans lequel le fluide réfrigérant circule selon une boucle comportant au moins successivement le compresseur (C), le quatrième échangeur thermique (E4), simultanément le cinquième échangeur thermique (E5) et le deuxième échangeur thermique (E2), avant de traverser à nouveau le compresseur (C),
un mode I (fig. 16) dans lequel le fluide réfrigérant circule selon une boucle comportant au moins successivement le compresseur (C), le premier échangeur thermique (E1), et le cinquième échangeur thermique (E5) avant de traverser à nouveau le compresseur (C),
un mode J (fig. 17) dans lequel le fluide réfrigérant circule selon une boucle comportant au moins successivement le compresseur (C), le premier échangeur thermique (E1), simultanément le cinquième échangeur thermique (E5) et le deuxième échangeur thermique (E2) avant de traverser à nouveau le compresseur (C),
un mode K (fig. 18) dans lequel le fluide réfrigérant circule selon une boucle comportant au moins successivement le compresseur (C), le premier échangeur thermique (E1), et le quatrième échangeur thermique (E4) avant de traverser à nouveau le compresseur (C),
un mode L (fig. 19) dans lequel le fluide réfrigérant circule selon une boucle comportant au moins successivement le compresseur (C), le premier échangeur thermique (E1), simultanément le quatrième échangeur thermique (E4) et le deuxième échangeur thermique (E2), avant de traverser à nouveau le compresseur (C),
un mode M (fig. 22) dans lequel le fluide réfrigérant circule selon une boucle comportant au moins successivement le compresseur (C), simultanément le premier échangeur thermique (E1) et le quatrième échangeur thermique (E4), ensuite le cinquième échangeur thermique (E5) avant de traverser à nouveau le compresseur (C),
un mode N (fig. 20) dans lequel le fluide réfrigérant circule selon une boucle comportant au moins successivement le compresseur (C), simultanément le premier échangeur thermique (E1) et le cinquième échangeur thermique (E5), ensuite le quatrième échangeur thermique (E4) avant de traverser à nouveau le compresseur (C).

10. Installation selon l'une des revendications précédentes, dans laquelle le circuit réfrigérant (200) comprend un troisième échangeur thermique (E3), ledit troisième échangeur thermique (E3) du circuit réfrigérant (200) comprenant une première entrée/sortie (202) et une seconde entrée/sortie (204), ledit troisième échangeur thermique (E3) étant configuré pour réchauffer le fluide réfrigérant à l'état gazeux avant sa compression et refroidir le fluide réfrigérant après sa condensation.

11. Installation selon la revendication précédente, les moyens de circulation du circuit réfrigérant étant configurés pour fonctionner selon l'un au moins des modes suivants :
un mode A (fig. 11) dans lequel le fluide réfrigérant circule selon une boucle comportant au moins successivement le compresseur (C), le cinquième échangeur thermique (E5), la première entrée/sortie (202) du troisième échangeur thermique (E3), le deuxième échangeur thermique (E2) et la seconde entrée/sortie (204) du troisième échangeur thermique (E3),
un mode B (fig. 13) dans lequel le fluide réfrigérant circule selon une boucle comportant au moins successivement le compresseur (C), le cinquième échangeur thermique (E5), la première entrée/sortie du troisième échangeur thermique (E3), le quatrième échangeur thermique (E4) et la seconde entrée/sortie (204) du troisième échangeur thermique (E3),
un mode C (fig. 14) dans lequel le fluide réfrigérant circule selon une boucle comportant au moins successivement le compresseur (C), le cinquième échangeur thermique (E5), la première entrée/sortie du troisième échangeur thermique (E3), simultanément le quatrième échangeur thermique (E4) et le deuxième échangeur thermique (E2), ensuite la seconde entrée/sortie (204) du troisième échangeur thermique (E3),
un mode D (fig. 23) dans lequel le fluide réfrigérant circule selon une boucle comportant au moins successivement le compresseur (C), simultanément le premier échangeur thermique (E1) et le cinquième échangeur thermique (E5), ensuite successivement la première entrée/sortie du troisième échangeur thermique (E3), simultanément le quatrième échangeur thermique (E4) et le deuxième échangeur thermique (E2), ensuite la seconde entrée/sortie (204) du troisième échangeur thermique (E3),
un mode E (fig. 24) dans lequel le fluide réfrigérant circule selon une boucle comportant au moins successivement le compresseur (C), simultanément le premier échangeur thermique (E1) et le quatrième échangeur thermique (E4), ensuite successivement la première entrée/sortie du troisième échangeur thermique (E3), simultanément le cinquième échangeur thermique (E5) et le deuxième échangeur thermique (E2), ensuite la seconde entrée/sortie (204) du troisième échangeur thermique (E3),
un mode F (fig. 21) dans lequel le fluide réfrigérant circule selon une boucle comportant au moins successivement le compresseur (C), le quatrième échangeur thermique (E4), la première entrée/sortie du troisième échangeur thermique (E3), le cinquième échangeur thermique (E5), et la seconde entrée/sortie (204) du troisième échangeur thermique (E3),
un mode G (fig. 12) dans lequel le fluide réfrigérant circule selon une boucle comportant au moins successivement le compresseur (C), le quatrième échangeur thermique (E4), la première entrée/sortie du troisième échangeur thermique (E3), le deuxième échangeur thermique (E2) et la seconde entrée/sortie du troisième échangeur thermique (E3)
un mode H (fig. 15) dans lequel le fluide réfrigérant circule selon une boucle comportant au moins successivement le compresseur (C), le quatrième échangeur thermique (E4), la première entrée/sortie du troisième échangeur thermique (E3), simultanément le cinquième échangeur thermique (E5) et le deuxième échangeur thermique (E2), ensuite la seconde entrée/sortie (204) du troisième échangeur thermique (E3),
un mode I (fig. 16) dans lequel le fluide réfrigérant circule selon une boucle comportant au moins successivement le compresseur (C), le premier échangeur thermique (E1), la première entrée/sortie du troisième échangeur thermique (E3), le cinquième échangeur thermique (E5) et la seconde entrée/sortie (204) du troisième échangeur thermique (E3),
un mode J (fig. 17) dans lequel le fluide réfrigérant circule selon une boucle comportant au moins successivement le compresseur (C), le premier échangeur thermique (E1), la première entrée/sortie du troisième échangeur thermique (E3), simultanément le cinquième échangeur thermique (E5) et le deuxième échangeur thermique (E2), ensuite la seconde entrée/sortie (204) du troisième échangeur thermique (E3),
un mode K (fig. 18) dans lequel le fluide réfrigérant circule selon une boucle comportant au moins successivement le compresseur (C), le premier échangeur thermique (E1), la première entrée/sortie du troisième échangeur thermique (E3), le quatrième échangeur thermique (E4) et la seconde entrée/sortie (204) du troisième échangeur thermique (E3),
un mode L (fig. 19) dans lequel le fluide réfrigérant circule selon une boucle comportant au moins successivement le compresseur (C), le premier échangeur thermique (E1), la première entrée/sortie du troisième échangeur thermique (E3), simultanément le quatrième échangeur thermique (E4) et le deuxième échangeur thermique (E2), ensuite la seconde entrée/sortie (204) du troisième échangeur thermique (E3),
un mode M (fig. 22) dans lequel le fluide réfrigérant circule selon une boucle comportant au moins successivement le compresseur (C), simultanément le premier échangeur thermique (E1) et le quatrième échangeur thermique (E4), ensuite successivement la première entrée/sortie du troisième échangeur thermique (E3), le cinquième échangeur thermique (E5), et la seconde entrée/sortie (204) du troisième échangeur thermique (E3),
un mode N (fig. 20) dans lequel le fluide réfrigérant circule selon une boucle comportant au moins successivement le compresseur (C), simultanément le premier échangeur thermique (E1) et le cinquième échangeur thermique (E5), ensuite successivement la première entrée/sortie du troisième échangeur thermique (E3), le quatrième échangeur thermique (E4) et la seconde entrée/sortie (204) du troisième échangeur thermique (E3).

12. Véhicule automobile comprenant une installation selon l'une des revendications précédentes.
